# EUROPÄISCHE PATENTSCHRIFT

(11) **EP 1 797 404 B1**
(45) Veröffentlichungstag und Bekanntmachung des Hinweises auf die Patenterteilung: **27.11.2019**
(21) Anmeldenummer: 05792135.5
(22) Anmeldetag: 16.09.2005
(51) Int. Cl.: G01F 1/84, G01F 15/18, G01N 9/00, F16L 13/14

(54) **VERBUND-SYSTEM, VERFAHREN ZU DESSEN HERSTELLUNG SOWIE MESSAUFNEHMER MIT EINEM SOLCHEN VERBUND-SYSTEM**
COMPOSITE SYSTEM, METHOD FOR PRODUCING SAID SYSTEM AND SENSOR COMPRISING A COMPOSITE SYSTEM OF THIS TYPE
SYSTEME COMPOSITE, PROCEDE DE FABRICATION ASSOCIE ET CAPTEUR DE MESURE DOTE D'UN SYSTEME COMPOSITE DE CE TYPE

(30) Priorität: 05.10.2004 DE 102004048765
(43) Veröffentlichungstag der Anmeldung: 20.06.2007
(73) Patentinhaber: Endress+Hauser Flowtec AG, 4153 Reinach (CH)
(72) Erfinder: LORENZ, Rainer, 79540 Lörrach (DE)
(74) Vertreter: Andres, Angelika Maria
(86) Internationale Anmeldenummer: PCT/EP2005/054625
(87) Internationale Veröffentlichungsnummer: WO 2006/037722

(56) Entgegenhaltungen:
- EP-A2- 1 113 248
- WO-A-87/01428
- WO-A-03/048693
- DE-A1- 3 812 583
- DE-A1- 4 327 461
- DE-A1- 10 115 141
- DE-A1- 19 936 008
- US-A- 4 680 838
- US-B1- 6 168 069

## Beschreibung

Die Erfindung betrifft ein, insb. als ein Bestandteil eines Meßaufnehmers vom Vibrationstyp mit wenigstens einem betriebsgemäß vibrierenden Meßrohr ausgebildetes, Verbund-System, das ein, insb. aus Metall bestehendes, erstes Bauteil und ein mit diesem verbundenes, insb. ebenfalls aus Metall bestehendes, zweites Bauteil aufweist. Ferner besteht die Erfindung in einem Verfahren zum Herstellen eines solchen, insb. für die Verwendung in einem Meßaufnehmer vom Vibrationstyp geeigneten, Verbund-Systems.

In der industriellen Meß- und Automatisierungstechnik werden zum hochgenauen Erfassen von Prozeß-Meßgrößen in Leitungen, insb. Rohrleitungen, strömender Medien, insb. zum Erfassen strömungsdynamischer und/oder rheologischer Meßgrößen, oftmals In-Line-Meßgeräte mit einem Meßaufnehmer vom Vibrationstyp verwendet, der wenigstens ein mit der mediumsführenden Rohrleitung kommunizierendes, im Betrieb vibrierendes Meßrohr aufweist. Aufbau, Wirkungsweise sowie Anwendungsmöglichkeiten solcher Meßaufnehmer vom Vibrationstyp sind u.a. in der US-A 41 27 028, der US-A 45 24 610, der US-A 47 68 384, der US-A 47 93 191, der US-A 48 23 614, der US-A 52 53 533, der US-A 56 10 342, der US-A 60 06 609, der US-A 60 47 457, der US-B 61 68 069, der US-B 63 14 820, der US-B 63 52 196, der US-B 63 97 685, der US-B 64 50 042, der US-B 64 87 917, der US-B 65 16 674, der US-B 65 19 828, der US-B 65 23 421, der US-B 65 98 281, der US-B 66 66 098, der US-B 66 98 644, der US-B 67 11 958, der US-A 67 69 163, der WO-A 03/048693 oder der eigenen nicht vorveröffentlichten deutschen Anmeldung DE10354373.2 ausführlich und detailliert beschrieben.

Meßaufnehmer vom Vibrationstyp dienen bekanntlich dazu, im Zusammenspiel mit einer daran angeschlossenen Meßgerät-Elektronik in dem momentan im wenigstens einen Meßrohr geführten Medium mit der zu messenden Prozeß-Meßgröße entsprechend korrespondierende Reaktionskräfte, wie z.B. mit einem Massendurchfluß korrespondierende Corioliskräfte, mit einer Dichte korrespondierende Trägheitskräfte oder mit einer Viskosität korrespondierende Reibungskräfte etc., zu erzeugen und von diesen abgeleitet ein mit der der Prozeß-Meßgröße, beispielsweise dem jeweiligen Massedurchfluß, der jeweilige Viskosität und/oder der jeweilige Dichte des Mediums, entsprechend korrespondierendes Meßsignal zu erzeugen. Das wenigstens eine Meßrohr des Meßaufnehmers ist dafür üblicherweise mediumsdicht, insb. druckdicht, und zumeist auch dauerhaft in den Verlauf der das Medium führenden Rohrleitung, z.B. mittels entsprechender Flanschanschlüsse, eingesetzt. Zum schwingfähigen Haltern des wenigstens eine Meßrohrs ist ferner ein im Vergleich dazu zumeist sehr biegesteif ausgeführten, rohr- oder rahmenförmigen, Trägerelement, beispielsweise aus Stahl, vorgesehen, das ein- und auslaßseitig an das jeweilige Meßrohr mechanisch gekoppelt, beispielsweise direkt daran fixiert, ist. Das Trägerelement kann, wie bei derartigen Meßaufnehmern üblich und auch dem oben genannten Stand der Technik ohne weiteres entnehmbar, mittels entsprechend von außen angebrachten Abdeckungen, wie z.B. rohrabdeckenden Kappen oder seitlich angebrachten Blechen, zum bereits erwähnten Meßaufnehmer-Gehäuse komplettiert oder auch selbst als Meßaufnehmer-Gehäuse ausgebildet sein.

Zum Antreiben des wenigstens einen Meßrohrs umfassen Meßaufnehmer der beschriebenen Art weiters eine mit der jeweiligen Meßgerät-Elektronik elektrisch verbundene Erregeranordnung mit einem auf das Meßrohr mechanisch einwirkenden, insb. elektro-dynamischen oder elektro-magnetischen, Schwingungserreger. Im Betrieb wird die Erregeranordnung von der Meßgerät-Elektronik mittels entsprechender Erregersignale in geeigneter Weise so angesteuert, daß das Meßrohr zumindest temporär Vibrationen, insb. Biegeschwingungen und/oder Torsionsschwingungen, ausführt. Des weiteren ist eine Schwingungsmeßsignale liefernden Sensoranordnung vorgesehen, die zumindest bei Verwendung des Meßaufnehmers als Coriolis-Massendurc hfluß-Meßaufnehmer wenigstens zwei voneinander beabstandete, auf einlaß- bzw. auslaßseitige Vibrationen des Meßrohrs reagierende Sensorelemente aufweist.

Neben der Möglichkeit des gleichzeitigen Messens mehrerer solcher Prozeßgrößen, insb. des Massendurchflusses, der Dichte und/oder der Viskosität, mittels ein und desselben Meßgeräts besteht ein weiterer wesentlicher Vorteil von In-Line-Meßgeräten mit Meßaufnehmern vom Vibrationstyp u.a. darin, daß sie innerhalb vorgegebener Betriebsgrenzen eine sehr hohe Meßgenauigkeit bei vergleichsweise geringer Störempfindlichkeit aufweisen. Darüber hinaus kann ein solches Meßgerät für praktisch jedes fließ- oder strömunsgfähige Medium verwendet und in einer Vielzahl verschiedenster Anwendungsbereiche der Meß- und Automatisierungstechnik eingesetzt werden.

Bei In-Line-Meßgeräten der beschriebenen Art, die als Coriolis-Massendurchflußmesser eingesetzt werden, ermittelt die jeweilige Meßgerät-E lektronik im Betrieb u.a. eine Phasendifferenz zwischen den beiden von den Sensorelementen gelieferten Schwingungsmeßsignalen und gibt die Meßgerät-Elektronik an ihrem Ausgang ein davon abgeleitetes Meßwertsignal ab, das einen mit dem zeitlichen Verlauf des Massendurchflusses korrespondierenden Meßwert darstellt. Soll, wie bei derartigen In-Line-Meßgeräten üblich, auch die Dichte des Mediums gemessen werden, so ermittelt die Meßgerät-Elektronik dafür anhand der Schwingungsmeßsignale weiters eine momentane Schwingfrequenz der Meßrohre. Außerdem kann beispielsweise auch die Viskosität des Mediums anhand der zur Aufrechterhaltung von den Meßrohr-Schwingungen erforderlichen Leistung, insb. einem entsprechenden Erregerstrom für die Erregeranordnung, gemessen werden.

Zum Betrieb des Meßaufnehmers, insb. auch zur Weiterverarbeitung oder Auswertung des wenigstens einen Meßsignals, ist dieser, wie bereits angedeutet, mit einer entsprechenden Meßgerät-Elektronik elektrisch verbunden. In der industriellen Meß- und Automatisierungstechnik ist diese Meßgerät-Elektronik zudem oftmals über ein angeschlossenes Datenübertragungs-System mit anderen Meßgeräten und/oder mit einem entfernten Zentralrechner verbunden, wohin sie die Meßwertsignale, z.B. via digitalen Daten-Bus, sendet. Als Datenübertragungs-Systeme dienen hierbei oftmals, insb. serielle, Bus-Systeme, wie z.B. PROFIBUS-PA, FOUNDATION FIELDBUS sowie die entsprechenden Übertragungs-Protokolle. Mittels des Zentralrechner können die übertragenen Meßwertsignale weiterverarbeitet und als entsprechende Meßergebnisse z.B. auf Monitoren visualisiert und/oder in Steuersignale für entsprechende Stellglieder, wie z.B. Magnet-Ventile, Elektro-Motoren von Pumpen etc., umgewandelt werden. Zur Aufnahme der Meßgerät-Elektronik umfassen solche In-Line-Meßgeräte ferner ein Elektronik-Gehäuse, das, wie z.B. in der WO-A 00/36379 vorgeschlagen, vom Meßaufnehmer entfernt angeordnet und mit diesem nur über eine flexible Leitung verbunden sein kann oder das, wie z.B. auch in der EP-A 1 296 128 oder der WO-A 02/099363 gezeigt, direkt am Meßaufnehmer, insb. auf einem den Meßaufnehmer einhausenden Meßaufnehmer-Gehäuse, angeordnet ist.

Bei Meßaufnehmern der beschriebenen Art haben sich im wesentlichen zwei Arten von Rohrformen am Markt etabliert, nämlich einerseits im wesentlichen gerade Meßrohre und andererseits im wesentlichen in einer Rohrebene gebogene Meßrohre, unter denen die im wesentlichen S-, U- oder V-förmigen die wohl am meisten verwendeten sind. Insbesondere bei dem Messen von Massedurchflüssen dienenden Coriolis-Massedurchfluss-Meßaufnehmern werden bei beiden Arten von Rohrformen aus Symmetriegründen zumeist zwei im Ruhezustand im wesentlichen parallel zueinander verlaufende und zumeist auch parallel vom Medium durchströmte Meßrohre verwendet. Hierzu kann exemplarisch auf die US-A 41 27 028, die US-A 47 68 384, die US-A 47 93 191, die US-A 56 10 342, US-A 57 96 011 oder US-B 64 50 042 auf die verwiesen werden.

Neben Meßaufnehmern mit einer solchen Doppel-Meßrohranordnung sind aber auch Meßaufnehmer mit einem einzigen geraden oder gebogenen Meßrohr seit längerem am Markt erhältlich. Derartige Meßaufnehmer vom Vibrationstyp mit einem einzigen Meßrohr sind z. B. in der US-A 45 24 610, der US-A 48 23 614, der US-A 52 53 533, der US-A 60 06 609, der US-A 60 47 457, der US-A 61 68 069 der US-B 63 14 820, der US-B 63 97 685, der US-B 64 87 917, der US-B 65 16 674, der US-B 66 66 098, der US-B 66 98 644, der US-B 67 11 958, der WO-A 03/048693 oder der erwähnten eigenen Anmeldung DE10354373.2 beschrieben. Jeder der darin in der gezeigten Meßaufnehmer umfaßt u.a. ein ein Einlassende und ein Auslassende aufweisenden, zumindest zeitweise vibrierenden Meßrohr, beispielsweise aus Stahl, Titan, Tantal oder Zirkonium oder entsprechenden Legierungen, zum Führen des zu messenden Mediums, wobei das Meßrohr zum Hindurchströmenlassen des Mediums über ein in das Einlassende mündendes erstes Rohrsegment und über ein in das Auslassende mündendes zweites Rohrsegment mit einer angeschlossenen Rohrleitung kommuniziert und wobei das Meßrohr im Betrieb mechanische Schwingungen um eine die beiden Rohrsegmente imaginär verbindende Schwingungsachse ausführt sowie mit einem zumeist sehr biegesteif ausgeführten, rohr- oder rahmenförmigen, Trägerelement, beispielsweise aus Stahl, zum schwingfähigen Haltern des Meßrohrs, das mittels eines ersten Übergangstücks am ersten Rohrsegment und mittels eines zweiten Übergangstücks am zweiten Rohrsegment fixiert ist.

Für den vorbeschriebenen Fall, daß es sich bei dem verwendeten Meßaufnehmer um einen solchen mit einem einzigen Meßrohr handelt, sind im Meßaufnehmer zudem ein, insb. schwingfähig im Meßaufnehmer-Gehäuse aufgehängtes, am Meßrohr fixierter Gegenschwinger vorgesehen, der abgesehen vom Haltern des Schwingungserregers und der Sensorelemente, dazu dient, das vibrierende Meßrohr von der angeschlossenen Rohrleitung schwingungstechnisch zu entkoppeln. Der zumeist aus kostengünstigem Stahl gefertigte Gegenschwinger kann dabei z.B. als ein koaxial zum Meßrohr angeordneter rohrförmiger Kompensationzylinder oder kastenförmiger Tragrahmen ausgeführt sein. Den referierten Merkmalsensembles der einzelnen vorbeschriebenen Meßaufnehmer ist noch hinzuzufügen, daß ein gerades Meßrohr bzw. gerade Meßrohre zumeist aus reinem Titan, einer Titan-Legierung mit hohem Titangehalt, reinem Zirconium oder einer Zirconium-Legierung mit hohem Zirconiumgehalt bestehen, da sich gegenüber Meßrohren aus rostfreiem Stahl, der bei geraden Meßrohren an sich ebenfalls möglich ist, üblicherweise kürzere Baulängen ergeben, und daß ein gebogenes Meßrohr bzw. gebogene Meßrohre bevorzugt aus rostfreiem Stahl bestehen, obwohl Titan oder Zirconium bzw. deren Legierungen auch hier als Material der Meßrohre möglich sind. Darüber hinaus ist aber beispielsweise auch die Verwendung von Tantal oder entsprechenden Tantal-Legierungen als Meßrohr-Material üblich.

Wie sich aus den vorangehenden Ausführungen unschwer ableiten läßt, weist praktisch jeder der im vorgenannten Stand der Technik gezeigten Meßaufnehmer wenigstens ein, insb. bi-metallisches, Verbund-System auf, das ein erstes Bauteil - beispielsweise das erste oder das zweite Endstück - und ein sich zumindest teilweise durch das erste Bauteil entlang einer gedachten Längsachse des Verbund-Systems erstreckendes zweites Bauteil - beispielsweise das Meßrohr - umfaßt, wobei üblicherweise das zweite Bauteil mit einer als Zylinderoberfläche ausgebildeten äußeren Oberfläche eine innere Oberfläche des ersten Bauteils flächig kontaktiert, die durch eine Innenwand einer sich innerhalb des ersten Bauteils erstreckenden Bohrung gebildet ist. Gleichermaßen sind aber auch Meßaufnehmer mit Doppel-Meßrohranordnung, wie insb. auch in der US-A 56 10 342 beschrieben, üblicherweise aus mehreren solcher, insb. bi-metallischen, Verbund-Systemen aufgebaut. Neben dem durch Meßrohr und Endstück gebildeten Verbund-System sind als weitere Beispiele für solche, insb. bi-metallische, Verbund-Systeme im besonderen auch die Verbindung von Meßrohr und Flansch oder die Verbindung Flansch und Meßaufnehmer-Gehäuse zu nennen, vgl. hierzu auch die US-B 61 68 069, die US-B 63 52 196, die

US-B 66 98 644. Beispielsweise kann, wie auch in der US-A 60 47 457 beschrieben, in der Mitte zwischen den Endstücken am Meßrohr ein kreisscheibenförmiger Metallkörper fixiert sein, der als ein Teil der Erregeranordnung dient bzw. mit dieser zusammenwirkt.

An die in der industriellen Meß- und Automatisierungstechnik verwendeten Meßaufnehmer vom Vibrationstyp werden sehr hohe Anforderungen hinsichtlich der Meßgenauigkeit gestellt, die üblicherweise im Bereich von etwa 0,1% des Meßwerts und/ oder 0,01% vom Meßendwert liegt. Dafür ist im besonderen eine sehr hohe Stabilität des Nullpunkts wie auch eine sehr hohe Robustheit der gelieferten Meßsignale erforderlich, besonders auch bei sich im Betrieb erheblich ändernden Umgebungs-, Einspann- und/oder Betriebsbedingungen. Wie bereits in den erwähnten US-A 56 10 342, der
US-A 60 47 457, der US-A 61 68 069, der US-B 65 19 828, der
US-B 65 98 281, der US-A 66 98 644, der US-B 67 69 163, der
WO-A 03/048693 oder der erwähnten eigenen Anmeldung DE10354373.2 eingehend diskutiert, wird dabei auch der mechanischen Festigkeit, insb. der Wechselfestigkeit, eine erhebliche Bedeutung beigemessen, mit der die einzelnen Bauteile der vorgenannten im Meßaufnehmer gebildeten Verbund-Systeme aneinander fixiert sind. Bereits geringste Abweichung der Festigkeit der vorgenannten Verbundsysteme von der beim Kalibrieren vorgefundenen Situation können erhebliche, nicht mehr beherrschbare Schwankungen des Nullpunkts und somit praktisch unbrauchbare Meßsignale zur Folge haben. Üblicherweise können solche auf Entfestigungserscheinungen in den Verbund-Systemen zurückzuführenden Nullpunktfehler lediglich durch aufwendige, von der Rohrleitung entfernt durchgeführte Reparaturmaßnahmen oder nur durch Einbau eines neuen In-Line-Meßgeräts behoben werden. Einen besonderen Einfluß auf die Stabilität des Nullpunkts und/oder die Verfügbarkeit des Meßaufnehmers hat dabei, wie auch bereits in der US-A 56 10 342, der US-A 60 47 457, der US-B 61 68 069, der
US-A 65 98 281, der US-B 66 34 241 oder auch der WO-A 03/048693 ausführlich diskutiert, die Art und Weise der Befestigung des Meßrohrs innerhalb des äußeren Trägerelements und dem ggf. vorhanden Gegenschwinger.

Traditionell werden die Bauteile solcher Verbund-Systeme zumindest anteilig aneinander stoffschlüssig durch Löt- und/oder Schweißverbindungen fixiert. So ist beispielsweise bereits in der US-A 48 23 614 beschrieben, daß die jeweilige Ende des einen Meßrohrs in eine jeweilige Bohrung eines einlaßseitigen bzw. eines auslaßseitigen Endstücks eingesteckt und darin durch stirnseitiges und rückseitiges Schweißen, Löten oder Hartlöten fixiert sind, vgl. die in einigen der Figuren zu sehenden Materialwülste. Die Endstücke sind ihrerseits im äußeren Trägerelement fixiert. Weiter Beispiele für solche Verbund-Systeme mit stoffschlüssigen Verbindungen sind u.a. auch in der US-B 61 68 069, der US-B 63 52 196, der US-B 65 19 828, der US-B 65 23 421, der US-B 65 98 281, der US-B 66 98 644 oder der US-B 67 69 163 gezeigt.

Wie in der US-A 56 10 342 beschrieben, hinterläßt die während des erwähnten Schweißens, Lötens oder Hartlöten nötige Wärmezufuhr an den Fixierstellen der Meßrohre mit den Endstücken nach dem Abkühlen einen mechanischen Spannungszustand, der zu Spannungsriß-Korrosion führen kann, die die Fügestelle und/oder das Meßrohr-Material mehr oder weniger schwächen können. Als ein weiteres Problem solcher stoffschlüssigen Schweiß- oder Lötverbindungen sind in der US-B 65 19 828 oder der US-B 65 98 281 auch materialverschleißende Schwingungsreibungen im Bereich der Fügestellen genannt. Darüber hinaus können sich, wie auch der US-A 60 47 457, der US-B 61 68 069, der US-B 63 52 196, der US-B 65 98 281, der US-B 66 34 241, der US-B 65 23 421 oder der US-B 66 98 644 entnehmbar, im Besonderen bei bi-metallischen Verbund-Systemen, also bei solchen, bei denen das erste Bauteil und das zweite Bauteil aus unterschiedlichen Metallen, beispielsweise Stahl und Titan, bestehen, Probleme hinsichtlich der Dauerfestigkeit der dann verwendeten Lotverbindungen auftreten, die sich u.a. auf unzureichende Benetzung und/oder in radialer Richtung wechselnde mechanische Beanspruchungen der Fügestellen zurückführen lassen. Infolgedessen ist oftmals eine Verringerung der nominellen Auszugsfestigkeit des Verbund-System, gemessen in Richtung von dessen Längsachse, zu verzeichnen.

Zur Verbesserung der Dauerfestigkeit solcher, beispielsweise von einem Meßrohr eines Coriolis-Massedurchfluss-Meßaufnehmers und einem darauf aufgeschobenen und fixierten Metallkörper gebildeten, Verbund-Systeme wurde in der bereits erwähnten US-A 56 10 342 wie auch der WO-A 03/048693 jeweils ein FixierVerfahren für Meßrohre in Endstücken vorgeschlagen, bei dem jedes Ende des Meßrohrs in eine entsprechende Bohrung eines einlaßseitigen bzw. eines auslaßseitigen Endstücks eingesteckt und mittels eines in das Ende eingebrachten WalzWerkzeugs mit der Innenwand der Bohrung, insb. ohne Wärmezufuhr, verpreßt werden, wodurch eine hochfeste Reibschlußverbindung zwischen dem ersten und dem zweiten Bauteil gebildet wird. Ein für dieses Verfahren entsprechend geeignetes WalzWerkzeug ist beispielsweise auch in der US-A 40 90 382 im Rahmen eines Verfahrens zum Fertigen von Boilern oder Wärmetauschern beschrieben.

Eine weitere Möglichkeit zur Herstellung solcher mittels hochfester Reibschlußverbindungen gebildeten Verbund-Systeme besteht, wie z.B. auch in der US-A 60 47 457 vorgeschlagen, darin, daß das erste Bauteil, nach dem es auf das zweite Bauteil aufgeschoben bzw. aufgesteckt worden ist, mittels eines Preß-Werkzeuges von außen zusammendrückt und dabei unterhalb einer Rekristallisationstemperatur der Bauteil-Materials, insb. bei Raumtemperatur, gemischt plastisch-elastisch verformt wird. Die dafür aufgewendeten Verformungskräfte sind dabei jeweils so ausgebildet, daß das zweite Bauteil im wesentlichen keine Querschnittsverjüngungen und/oder - verengungen erfährt, so daß ein initialer Innen-Durchmesser des zweiten Bauteils auch nach dem Herstellen des Verbund-Systems praktisch durchgängig unverändert erhalten bleibt. Eine für das Verpressen entsprechend geeignete Vorrichtung ist beispielsweise in der US-A 37 45 633 gezeigt. Alternativ zum plastisch-elastischen Verpressen kann ein solches mittels Reibschluß gebildetes Verbund-System beispielsweise auch dadurch hergestellt werden, daß das erste Bauteil, wie auch in der US-B 65 98 281 oder der US-B 65 19 828 gezeigt, auf das zweite Bauteil thermisch aufgeschrumpft oder unter Zwischenlage elastisch verformbarer Klemmelemente mit dem zweiten Bauteil verspannt wird.

Weiterführend ist in der US-B 65 98 281 oder der US-B 65 19 828 diskutiert worden, daß auch bei rein reibschlüssigen Preßverbindungen aufgrund von Schwingungsreibung ein allfälliges Entfestigen des Verbund-Systems nicht immer sicher vermieden werden kann. Überdies können solchen Schwingungsreibungen die Materialien des Verbund-Systems im Bereich der einander kontaktierenden Oberflächen korrodieren lassen. Des weiteren können, wie der WO-A 03/048693 entnehmbar, die üblicherweise unterschiedlichen Ausdehnungsverhalten der Bauteile der vorgenannten Verbund-Systeme, beispielsweise also die oben erwähnten Endstücke und der darin jeweils eingespannten Rohrsegmente des Meßrohrs, dazu führen, daß die durch das erste Bauteil auf das zweite Bauteil ausgeübten Einspannkräfte bei Temperaturschwankungen, insb. bei allfälligen Temperaturschocks wie sie z.B. bei turnusmäßig durchgeführten Reinigungsmaßnahmen mit extrem heißen Spül-Flüssigkeiten auftreten können, unter einen kritischen Wert sinken können. Dies wiederum kann bedeuten, daß das erste Bauteil und das zweite Bauteil aufgrund von thermisch bedingten Ausdehnungen stellenweise den durch das Walzen, Pressen oder Aufschrumpfen herbeigeführten mechanischen Kontakt verlieren und somit das Verbund-System in unzulässigem Maße entfestigt werden können. Infolgedessen können wiederum die Auszugsfestigkeit des Verbund-Systems sinken und insoweit auch mit derartigen Preßverbänden die geforderte hohe Nullpunktstabilität des Meßaufnehmers nicht ohne weiteres sichergestellt werden.
Zur Behebung der durch Schwingungsreibung zwischen den Bauteilen verursachten Mängel in Verbund-System der beschriebenen Art wird in der US-B 65 98 281 bzw. der US-B 65 19 828 vorgeschlagen, die zugehörigen Bauteile nach dem Herstellen des Preßverbandes, insb. unter Verwendung eines als Zwischenlage dienenden Füllmaterials, zusätzlich miteinander zu verschweißen, was allerdings ggf. die oben erwähnten, mit Schweißverbindungen einhergehenden Probleme erneut aufwerfen kann. Demgegenüber wird in der WO-A 03/048693 ein Verbund-System vorgeschlagen, das eine erhöhte Verdreh-Festigkeit dadurch erfährt, daß eine in Richtung der Längsachse des Verbund-System verlaufende Nut in die Innenwand des ersten Bauteils eingeformt ist, die unter Bildung eines in einer Umfangrichtung wirkenden Formschluß ein Verdrehen des ersten Bauteils gegenüber dem zweiten Bauteil wirksam verhindern kann. Allerdings kann auch das hier gezeigte Verbund-System, insb. bei Verwendung in einem Meßaufnehmer mit zumindest zeitweise Biegeschwingungen ausführendem Meßrohr, sei es durch Schwingungsreibung und/oder durch thermisch bedingtes Dehnen, eine Verringerung seiner nominellen Auszugsfestigkeit erfahren.
Ausgehend von den vorbeschriebenen Nachteilen, die mit den in Meßaufnehmern vom Vibrationstyp herkömmlicherweise verwendeten Verbund-Systemen einhergehen, besteht eine Aufgabe der Erfindung darin, für die Verwendung in Meßaufnehmern vom Vibrationstyp geeignete, insb. bi-metallische, Verbund-Systeme dahingehend zu verbessern, daß deren nominelle Auszugsfestigkeit ohne erheblichen fertigungstechnischen und/oder konstruktiven Mehraufwand, insb. auch unter Wahrung der durch die elastische oder gemischt plastischelastische Verformung von dessen Bauteilen gewonnenen Vorteile, erhöht werden kann. Darüber hinaus ist es eine Aufgabe der Erfindung auch die Dauerfestigkeit solcher Verbund-Systeme, insb. auch trotz des wiederholten Auftretens von Schwankungen der Umgebungs- und/oder der Mediumstemperatur und den damit einhergehenden thermisch bedingten Verformungen der jeweils zugehörigen Bauteile, zu erhöhen.
Zur Lösung der Aufgaben besteht die Erfindung in einem Meßaufnehmer vom Vibrationstyp gemäß dem unabhängigen Anspruch 1 sowie in einem Verfahren gemäß Anspruch 18 zur Herstellung eines solchen Meßaufnehmers.

Ein Grundgedanke der Erfindung besteht darin, die Fixierung einzelner Bauteile oder Komponenten eines Meßaufnehmers vom Vibrationstyp, beispielsweise die Fixierung des Meßrohrs im äußeren Trägerelement und/oder im Gegenschwinger, zumindest anteilig mittels eines im Bereich der einander üblicherweise unmittelbar kontaktierenden Wirkflächen vorgesehen Formschlusses zu realisieren.

Als besonders vorteilhaft hat es sich dabei erwiesen, die Fixierung der einzelnen Bauteile sowohl anteilig mittels einer reibschlüssigen Verbindung als auch anteilig mittels einer, insb. im Bereich der reibschlüssigen Verbindung plazierten oder darin integrierten, formschlüssigen Verbindung zu realisieren oder anders gesagt, den Meßaufnehmer zumindest anteilig mittels solcher Verbund-Systeme aufzubauen, deren Bauteile gemischt form- und reibschlüssig miteinander verbunden sind. Zu dem ist es besonders durch das anteilig plastische, insb. das gemischt elastischplastische, Verformen einzelner Oberflächen und/oder Teilkonturen oder auch ganzer Bauteilen möglich, den Formschluß auf einfache Weise sehr paßgenau herzustellen und dabei extrem tragfähig auszulegen.

Ein weiterer Vorteil der Erfindung besteht u.a. darin, daß, falls erforderlich, auf einen Löt- oder Schweißprozeß zur Fixierung des Meßrohrs im Meßaufnehmer verzichtet werden kann, da bereits allein durch die Mischung aus Form- und Reibschluß eine sehr stabile, hochfeste und dauerhafte mechanischen Verbindung zwischen den Bauteilen des Verbund-Systems, insb. auch trotz andauernder Vibrationsbeanspruchung des Verbund-Systems, geschaffen werden kann. Entsprechende Untersuchungen haben beispielsweise ergeben, daß sich auch bei Verzicht auf zusätzliche Löt- oder Schweißverbindungen im Vergleich zu herkömmlichen, allein durch Reibschluß gebildete Verbund-System der beschriebenen Art eine Erhöhung der Auszugsfestigkeit um mehr als das 3-fache ohne weiteres erzielen läßt. Ein weiterer Vorteil der Erfindung ist auch darin zu sehen, daß zur Fertigung des erfindungsgemäßen Verbund-System die bereits in der US-A 56 10 342 oder der US-A 60 47 457 beschriebenen und inzwischen betriebsbewährten kaltverformenden Fixierverfahren angewendet und dementsprechende auch die bereits installierten Preß- und/oder Walz-Vorrichtungen überwiegend weiterverwendete werden können. Zu dem kann bei Verwendung der vorgenannten Preß- oder Walz-Vorrichtungen einerseits davon ausgegangen werden, daß schon allein durch die Weiterbenutzung der für die Fertigung der herkömmlichen Verbund-Systeme als optimal erkannten Maschinen- und Werkzeug-Einstellungen eine deutliche Verbesserung der Auszugsfestigkeit und somit auch der Dauerbelastbarkeit erzielt werden kann. Anderseits kann nunmehr im Vergleich zu herkömmlichen mit rein reibschlüssigen Verbindungen gebildeten Verbund-Systemen auch erheblich leichter sichergestellt werden, daß das Meßrohr trotz der hohen Einspannkräfte, mit denen es im Trägerelement gehalten ist, selbst kaum Verformungen erfährt und somit auch nach dem Einbau über die gesamte Meßrohrlänge auch nach dem Einbau einen weitgehend gleichbleibenden, uniformen Querschnitt aufweist.

Als weiterer Vorteil besonders gegenüber herkömmlichen Verbund-Systemen, die anteilig oder gänzlich mittels Stoffschluß gebildet sind, kann zudem die erhebliche Vereinfachung der Fertigung und auch die Senkung der Fertigungskosten angesehen werden. Überdies kann die geforderte hohe Qualität der Verbund-System, sei es hinsichtlich der Materialeigenschaften der verwendeten Bauteile oder hinsichtlich der mechanischen Festigkeit, nicht nur erhöht, sondern auch weitaus zuverlässiger reproduziert werden.

Die Erfindung sowie vorteilhafte Ausgestaltungen werden nun anhand von Figuren der Zeichnung näher erläutert, wobei
Fig. 1 teilweise im Schnitt eine Längsansicht eines, insb. als Coriolis-Massedurchflussaufnehmer ausgebildten Meßaufnehmer vom Vibrationstyp mit wenigstens zwei zu einem Verbund-System vereinigten Bauteilen zeigt,
Fig. 2 perspektivisch in teilweise geschnittener Ansicht ein für die Verwendung in einem Meßaufnehmer gemäß Fig. 1 geeignetes Verbund-System mit wenigstens einem ersten und einem zweiten Bauteil zeigt,
Fig. 3 vergrößert jeweils in einem Längsschnitt einen Teilkonturen für einen Formschluß aufweisenden Teil des ersten sowie des zweiten Bauteils von Fig. 2 unmittelbar vor dem Zusammenfügen der beiden Bauteile zeigt,
Fig. 4 bis 6 vergrößert jeweils in einem Längsschnitt verschiedene Ausgestaltungen eines einen Formschluß bildenden Teils des ersten sowie des zweiten Bauteils von Fig. 2 nach dem Zusammenfügen der beiden Bauteile zeigt,
Fig. 7 fotografisch in einem Längsschnitt einen Formschluß bildenden Teil des ersten sowie des zweiten Bauteils von Fig. 2 nach dem Zusammenfügen der beiden Bauteile zeigt,
Fig. 8 perspektivisch einen als erstes Bauteil des Verbund-Systems von Fig. 2 dienenden, auf einem nur teilweise dargestellten, kreiszylindrischen Meßrohr eines Meßaufnehmers vom Vibrationstyp fixierten kreisscheibenförmigen Metallkörper, der als zweites Bauteil des Verbund-Systems von Fig. 2 dient, zeigt und
Fig. 9 perspektivisch einen der Fixierung des zweiten Bauteils im ersten Bauteil dienenden Verfahrensschritt eines entsprechenden Herstellungsverfahrens für das Verbund-System von Fig. 2 zeigt.

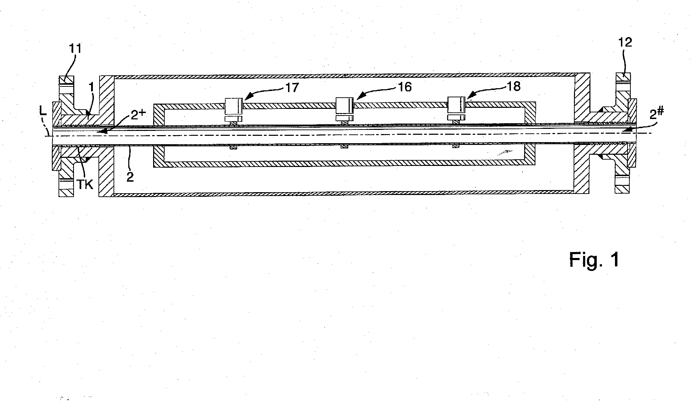

In der Fig. 1 ist ein Ausführungsbeispiel für ein, insb. bi-metallisches, Verbund-System dargstellt, das von einem ersten Bauteil 1 und einem sich zumindest teilweise durch das erste Bauteil entlang einer gedachten Längsachse L des Verbund-Systems erstreckenden zweiten Bauteil 2 gebildet ist. Wie aus der Fig. 1 ersichtlich, weist das zweite Bauteil 2 dabei eine zumindest teilweise gewölbte, insb. als Zylinderoberfläche ausgebildete, äußere Oberfläche auf, die eine innere Oberfläche des ersten Bauteils 1 flächig so kontaktiert, daß das erste Bauteil das zweite Bauteil zumindest abschnittsweise zumindest teilweise umgreift, wodurch eine erste und eine zweite Wirkfläche 1B, 2B des Verbund-Systems geschaffen sind. Zur Erhöhung der Dauerfestigkeit des Verbund-Systems, insb. zur Erhöhung der Auszugsfestigkeit von dessen zweiten Bauteil 2 aus dem ersten Bauteil 1, sind die durch die, insb. einander direkt und unmittelbar, kontaktierenden Oberflächen der beiden Bauteile gebildeten Wirkflächen 1B, 2B des Verbund-Systems derart geformt, daß die beiden Bauteile 1, 2 im Bereich dieser, insb. als in sich geschlossenen Umfangsflächen ausgebildete, Wirkflächen Teilkonturen TK aufweisen, die unter Bildung eines zumindest anteilig ebenfalls in Richtung der Längsachse L wirkenden Formschlusses zumindest teilweise ineinander greifen.

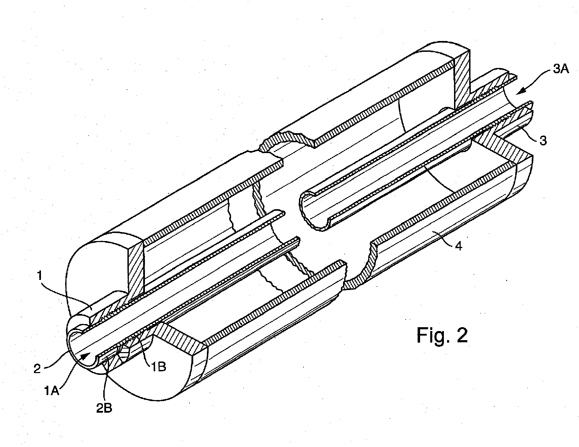

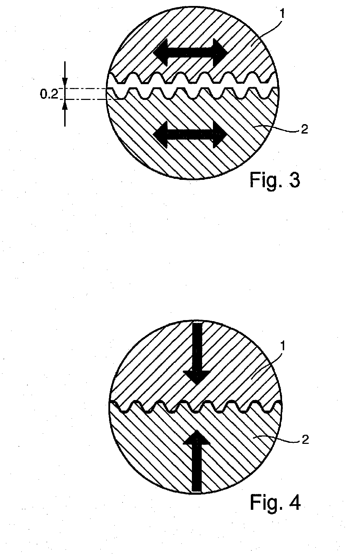

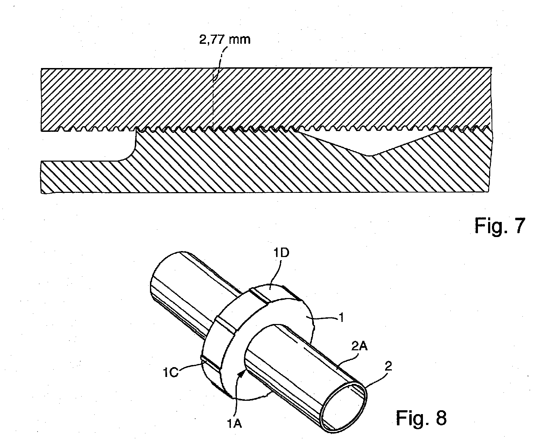

Gemäß der Erfindung weist wenigstens eines der Bauteile des Verbund-System dabei im Bereich der Wirkflächen ferner dauerhaft plastische Verformungen auf, wobei diese sich von der zugehörigen, die entsprechende Wirkfläche bildenden Oberfläche vorzugsweise mit einer Eindringtiefe von mindestens 0,05 mm, insb. aber von größer als 0,1 mm, in das Material hinein erstrecken. Dementsprechend werden gemäß einer Ausgestaltung des Verfahrens der Erfindung in die die erste Wirkfläche 1B des Verbund-Systems bildende Oberfläche des ersten Bauteils 1 sowie die die zweite Wirkfläche 2B des Verbund-Systems bildende Oberfläche des zweiten Bauteils 2 jeweils Teilkonturen TK eingeformt, und werden die Teilkonturen TK, wie auch in Fig. 3 bis 6 schematisch oder in der Fig.7 fotografisch dargestellt, während und nach dem Zusammenfügen der beiden Bauteile unter Bildung des Formschlusses zumindest teilweise ineinander greifen gelassen. In Ergänzung sind die beiden Bauteile sowie deren einander kontaktierenden Oberflächen der beiden Bauteile gemäß der Erfindung ferner so ausgebildet und so geformt, daß die beiden Bauteile 1, 2, wie auch in Fig. 2 schematisch dargestellt, anteilig unter Bildung eines zumindest anteilig in Richtung der Längsachse L wirkenden Reibschlusses miteinander mechanisch fest verbunden sind. Vorzugsweise sind die Oberflächen der Bauteile 1, 2 ferner so geformt, daß der darüber hergestellte Reibschluß auch in einer Umfangsrichtung der äußeren Oberfläche des zweiten Bauteils 2 wirkt. Dies wird beim erfindungsgemäßen Verbund-System dadurch erreicht, daß auf dessen durch die einander kontaktierenden Oberflächen der beiden Bauteile 1, 2 gebildete Wirkflächen 1B, 2B Einspannkräfte, insb. radial zur Längsachse 2 ausgerichtete Normalkräfte F, so einwirken, daß wenigstens eines der beiden Bauteile des Verbund-System zumindest anteilig dauerhaft elastisch verformt ist. Diese Normalkräfte werden nach der Erfindung zumindest anteilig dadurch erzeugt, daß wenigstens eines der beiden Bauteile 1, 2 gemischt elastisch-plastisch verformt ist, also sowohl plastisch verformte Bereiche, die durch Dehnung oder Stauchung des betreffend Bauteils darin eingetragen worden sind, als auch daraus resultierend elastisch verformte Bereiche aufweist. Die beiden Bauteile 1, 2 des Verbund-Systems bilden somit zumindest anteilig einen, insb. in Richtung der Längsachse L und/oder in einer Umfangsrichtung der äußeren Oberfläche des zweiten Bauteils 2 wirkenden, Preßverband. Bei den für die Bauteile 1, 2 verwendeten Materialien kann es sich beispielsweise um werkstofflich einander im wesentlichen gleichende oder zumindest ähnliche Materialien handeln. Allerdings können bei dem erfindungsgemäßen Verbund-System auch solche Bauteile ohne weiteres dauerhaft und sicher miteinander verbunden werden, die sich hinsichtlich wenigstens einer physikalischen und/oder chemischen Eigenschaft, beispielsweise hinsichtlich ihrer Wärmeausdehnungskoeffizienten, ihrer Elastizitäts-Moduln, ihrer Oberflächenhärten, ihrer Dehn- und/oder Streckgrenzen, ihrere Rekristallisationstemperatur, ihrer Schmelztemperatur etc., voneinander signifikant unterscheiden. Beispielsweise kann das Material des ersten Bauteils 1 einen Elastizitäts-Modul, der größer ist, als ein Elastizitäts-Modul des Materials des zweiten Bauteils 2 und/oder einen Wärmeausdehnungskoeffizient, der größer ist, als ein Wärmeausdehnungskoeffizient des Materials des zweiten Bauteils 2 und/oder eine Oberflächenhärte, die größer ist, als eine Oberflächenhärte des Materials des zweiten Bauteils 2 und/oder eine Dehn- oder Streckgrenze, die größer ist, als eine Dehn- oder Streckgrenze des Materials des zweiten Bauteils 2 etc., aufweisen oder vice versa.

Aufgrund seiner dauerhaft sehr hohen mechanischen Festigkeit, insb. auch unter Einwirkung von mittel- oder hochfrequent wechselnden Kräften, ist das erfindungsgemäße Verbund-System sehr gut für die Anwendung auf Meßaufnehmern vom Vibrationstyp geeignet. Bei dem in Fig. 1 gezeigten Ausführungsbeispiel handelt es sich daher um ein Verbund-System, das von einzelnen Komponenten eines in geschnittenere Längsansicht dargestellten Meßaufnehmers vom Vibrationstyp, z.B. eines Coriolis-Massedurchfluß-Meßaufnehmers, gebildet ist, der im Benutzungsfall in den Verlauf einer von einem zu messenden Fluid durchströmten, aus Übersichtlichkeitsgründen jedoch nicht dargestellten Rohrleitung einzufügen und mit ihr vor der Inbetriebnahme fluiddicht zu verbinden ist. Allerdings sind von besagtem Meßaufnehmer lediglich die für die Erläuterung der Erfindung wesentlichen in der Fig. 1 gezeigt; die restlichen und zur vollen Funktion des Meßaufnehmers ebenfalls erforderlichen Komponenten sind aus Übersichtlichkeitsgründen nicht dargestellt. Dies im besonderen auch deshalb, weil der Aufbau, die Funktionsweise wie auch die Anwendungsgebiete dem Fachmann an und für sich bekannt sind; insoweit wird hierzu auf die eingangs bereits erwähnten Dokumente des Standes der Technik verwiesen.

Bei dem in Fig. 1 beispielhaft gezeigten Verbund-System ist das erste Bauteil 1 als ein erstes Endstück mit einer darin eingebrachten Bohrung 1A ausgebildet, das ein einlaßseitiges gerades, im wesentlichen kreiszylindrisches erstes Rohrsegment eines - hier nur teilweise gezeigten - Meßrohrs des Meßaufnehmers aufnimmt, so daß dieses insoweit als zweites Bauteil 2 des Verbund-Systems fungiert. Bei dem gezeigten Ausführungsbeispiel wird also die als erste Wirkfläche 1B des Verbund-Systems dienende innere Oberfläche des ersten Bauteils 1 durch eine Innenwand der sich hier durchgehend durch das erste Endstück hindurch erstreckende Bohrung 1A gebildet, während die als zweite Wirkfläche 2B des Verbund-Systems dienende äußere Oberfläche 2B des zweiten Bauteils 2 durch eine Außenwand des Meßrohrs gebildet ist. Wie aus der Fig. 1 ferner ersichtlich, ist ein, insb. zum ersten Rohrsegment im wesentlichen identisch geformtes, zweites Rohrsegment des Meßrohrs in eine Bohrung 3A eines, insb. zum ersten Endstück im wesentlichen identisch geformten, zweiten Endstücks des Meßaufnehmers gesteckt. Nach einer Ausgestaltung der Erfindung sind das zweite Rohrsegment und das zweite Endstück in der gleichen Weise miteinander verbunden, wie das erste Rohrsegment mit dem ersten Endstück 11. Das erste Endstück und das praktisch als drittes Bauteil 3 des Verbund-Systems fungierende zweite Endstück sind weiters mittels wenigstens einer seitlich angeordneten, beispielsweise anmontierten oder angeschweißten, Trägerplatte oder einem im wesentlichen zylindrischen Trägerrohr 4 zu einem das wenigstens eine Meßrohr schwingfähig einspannenden Trägerelement vervollständigt.

Das im hier gezeigten Ausführungsbeispiel als Meßrohr ausgebildete zweite Bauteil 2 ist dafür vorgesehen, in den Verlauf einer von einem zu messenden Fluid, z. B. von einer Flüssigkeit oder von einem Gas, durchflossene Rohrleitung eingesetzt und mit dieser fluid-leitend so verbunden zu werden, daß das zu messende Fluid im Betrieb des entsprechenden Meßaufnehmers auch durch das Meßrohr fließen kann. Zu diesem Zweck sind entsprechende Flansche 11, 12 vorgesehen, die über ein jeweiliges kurzes Rohrstück mit einem jeweiligen Endstück verbunden sind, in das ein Einlaßende 2⁺ und ein Auslaßende 2^{#} des hier gezeigten einzigen Meßrohrs jeweils mündet. Anstatt über die Flansche kann der Meßaufnehmer auch mittels anderer üblicher Befestigungsmittel, beispielsweise mittels sogenannter TriClamp®-Anschlüsse oder auch mittels Verschraubungen, an die Rohrleitung angeschlossen werden.

Zum Erzeugen von mit einer physikalischen Meßgröße, z.B. einem Massedurchfluß, einer Dichte und/oder einer Viskosität des Fluids, korrespondierenden und insoweit das Fluid beschreibenden Reaktionskräften, z.B. mit dem Massedurchfluß korrelierte Corioliskräfte oder mit der Viskosität korreliert Reibungskräfte etc., wird das Meßrohr - angetrieben von einem darauf einwirkenden, elektro-mechanischen Schwingungserreger - im Betrieb zumindest zeitweise vibrierengelassen, wobei die beiden Rohrsegmente zumindest anteilig in Richtung einer die beiden Rohrsegment imaginär verbindende, mit der erwähnten Längsachse des Verbund-Systems im wesentlichen koinzidente Schwingungsachse axial oszillierenden Dehnungskräften unterworfen sind. Insoweit führt das vibrierende Meßrohr im Betrieb zumindest virtuell die Auszugsfestigkeit potentiell dauerhaft herabsetzende Auszugsbewegungen aus. Als Schwingungserreger 16 können die für diesen Zweck im Stand der Technik von solchen, insb. als Coriolis-Massedurchflußaufnehmer verwendeten, Meßaufnehmern vom Vibrationstyp beschriebenen verschiedenen Arten von Schwingungserregern dienen. Mittels des Schwingungserregers 16 wird das Meßrohr 13 im Betrieb zu Biegeschwingungen erregt, deren Schwingungsfrequenz üblicherweise gleich einer momentanen mechanischen Eigenfrequenz des Meßrohrs mit darin geführtem Fluid ist.

Zum Erfassen von Vibrationen des Meßrohrs und zum Erzeugen von mit diesen korrespondierenden Vibrationssignalen können in der dem Fachmann bekannten Weise entsprechende - hier nicht dargestellte - Schwingungssensoren in der Nähe des Meßrohrs angebracht sein. In der Fig. 1 ist beispielsweise ein erster und ein zweiter Sensor 17, 18 für die einlaß- bzw. die auslaßseitigen Bewegungen des Meßrohrs vorgesehen, von denen jeder jeweils etwa im gleichen Abstand zwischen dessen Mitte und dem einlaß- bzw. dem auslaßseitigen Endstück angeordnet ist. Im in Fig. 1 gezeigten Ausführungsbeispiel befindet sich auf dem Meßrohr am Ort des jeweiligen Sensors ferner ein etwa kreisring- oder kreischeibenförmiger Metallkörper, der mit dem Sensor 17, 18 zusammenwirkt und der nochmals in Fig. 8 in einer perspektivischen Seitenansicht vergrößert dargestellt ist. Als Sensoren 17, 18 können die für diesen Zweck im Stand der Technik von solchen, insb. als Coriolis-Massedurchflußaufnehmer verwendeten, Meßaufnehmern vom Vibrationstyp beschriebenen verschiedenen Arten von Sensoren dienen, wie z.B. elektrodynamisch oder optisch arbeitende Weg-, Geschwindigkeits- oder Beschleunigungssensoren.

Es sei an dieser Stelle noch erwähnte, daß anstelle des im Ausführungsbeispiel als Endstück und insoweit im Bereich der, insb. auch reibschlüssig aneinander gebundenen, Wirkflächen eher hülsenförmig ausgebildeten ersten Bauteils 1 aber auch ebenfalls rohrförmig oder, wie auch in Fig. 1 dargestellt, der eher ringförmig oder auch scheibenförmig ausgebildete Metallkörper als erstes Bauteil 1 dienen kann. Neben den hier gezeigten Ausführungsbeispielen für das erste Bauteil 1 mit im wesentlichen kreisförmigen Außenkonturen können ferner auch solche Bauteile verwendet werden, die eine nicht-kreisförmige Außenkontur, beispielsweise nach der Art einer SechskantMutter, einer Quadrat-Scheibe oder auch nach der in der US-A 60 47 457 gezeigten Art mit einem seitlichen Fortsatz etc., aufweisen. Demgemäß handelt es sich nach einer Ausgestaltung der Erfindung bei dem ersten Bauteil 1 um einen Metallkörper, der eine einer Außen-Umfangsfläche 2A des als Meßrohr ausgebildeten zweiten Bauteils 2 angepaßte Bohrung und eine entsprechende Innen-Umfangsfläche aufweist, und der auf der Außen-Umfangsfläche 2A des Meßrohrs unter Bildung des Verbund-Systems entsprechend fixiert worden ist. Das in der Fig. 1 als ring- bzw. scheibenförmiger Metallkörper ausgebildete Bauteil 1 kann, wie bereits angedeutet, als Halterung für einen der bereits erwähnten Schwingungssensoren oder den Schwingungserreger oder aber auch, wie in der WO-A 03/027616 vorgeschlagen, als den Querschnitt des Meßrohrs auch bei Druckschwankungen stabilisierendes Versteifungselement dienen.

Wie aus der vorangehenden Erläuterung unschwer erkennbar, geht es bei der vorliegenden Erfindung darum, eine Auszugsfestigkeit des Verbund-Systems und insoweit auch eine Dauerfestigkeit des Verbund-Systems zu maximieren. Für den vorbeschriebenen Fall, daß es sich bei den Bauteilen 1, 2, 3 des Verbund-Systems um Komponenten eines Meßaufnehmers vom Vibrationstyp handelt, geht es neben der Maximierung der Auszugsfestigkeit des Verbund-Systems im besonderen auch darum, eine eine Vibrationsfestigkeit und somit auch eine maximal mögliche oder zulässige Schwingspielzahl für das Meßrohr zu erhöhen. Dementsprechend sind die Teilkonturen TK für diesen Fall möglichst so angeordnet und so geformt, daß der Formschluß zumindest dann einer potentiell möglichen oder zumindest virtuell vorhandenen Auszugsbewegung des Meßrohrs entgegenwirkt, wenn das vibrierende Meßrohr im Betrieb gedehnt wird. In vorteilhafter Weise sind die Teilkonturen TK ferner möglichst so angeordnet und so geformt, daß der Formschluß auch dann einer potentiell möglichen oder zumindest virtuell vorhanden Auszugsbewegung des Meßrohrs entgegenwirkt, wenn das vibrierende Meßrohr im Betrieb entspannen gelassen wird.

Zum Herstellen des Verbund-Systems wird, wie in Fig. 3 schematisiert dargestellt, das erste Bauteil 1 - beispielsweise also vorgenanntes Endstück - mit dem zweiten Bauteil 2 - beispielsweise also dem Meßrohr - in der Weise zusammengeführt, daß sich das zweite Bauteil 2 zumindest teilweise durch die im ersten Bauteil 1 gebildete Bohrung 1A in Richtung der Längsachse L des Verbund-Systems erstreckt. Nachfolgend werden die beiden Bauteile 1, 2 aneinander bindenden Wirkflächen 1B, 2B des Verbund-Systems dadurch gebildet, daß, wie in Fig. 4 schematisiert dargestellt, Verformungskräfte F auf wenigstens eines der beiden Bauteile 1, 2 in der Weise einwirken gelassen werden, daß wenigstens eines der beiden Bauteile 1, 2 zumindest anteilig elastisch, insb. gemischt elastisch-plastisch, also sowohl anteilig plastisch als auch anteilig elastisch, verformt wird. Bei dem Verfahren der Erfindung sind die innere Oberfläche des ersten Bauteils 1 und die äußere Oberfläche des zweiten Bauteils 2 dafür so geformt und sind die auf die beiden Bauteile 1, 2 einwirkenden Verformungskräfte F so ausgebildet, daß eine von der inneren Oberfläche des ersten Bauteils 1, insb. in Form einer in sich geschlossenen Umfangsfläche, gebildete erste Wirkfläche 1B des Verbund-Systems und eine von der äußeren Oberfläche des zweiten Bauteils 2, insb. in Form einer in sich geschlossenen Umfangsfläche, gebildete zweite Wirkfläche 2B des Verbund-Systems unter Bildung eines zumindest anteilig in Richtung der Längsachse L wirkenden Reibschlusses sowie eines ebenfalls zumindest anteilig in Richtung der Längsachse wirkenden Formschlusses zumindest abschnittsweise auch nach dem Fertigungsprozeß einander dauerhaft kontaktieren. Dies wird gemäß dem Verfahren der Erfindung dadurch erreicht, daß wenigstens eines der beiden Bauteile 1, 2 zumindest anteilig plastisch so verformt wird, daß darin dauerhaft mechanische Spannungen aufgebaut und somit zumindest in diesem Bauteil, insb. aber beiden Bauteilen 1, 2, dauerhaft elastischen Verformungen auftreten, vgl. hierzu insb. auch die eingangs erwähnten US-A 56 10 342, US-A 60 47 457 oder US-B 65 19 828. Dementsprechend besteht wenigstens eines der Bauteile 1, 2 gemäß einer Weiterbildung der Erfindung aus einem im wesentlichen duktilen, also auch plastisch verformbaren Material. Beispielsweise kann als Material für die Bauteile 1, 2 des Verbund-Systems ein Metall, wie beispielsweise Edelstahl, Titan, Tantal, Zirkonium oder einer daraus entsprechend bestehenden Metall-Legierung, verwendet werden.

Um eine möglichst hohe axiale Auszugfestigkeit in Richtung der Längsachse L des Verbund-Systems zu erzielen überdecken wenigstens zwei miteinander in Eingriff stehende Flanken der den Formschluß bildenden Teilkonturen TK sind gemäß einer Ausgestaltung der Erfindung einander soweit, daß der Formschluß eine Tragtiefe von mindestens 0,05 mm, insb. von größer als 0,1 mm, aufweist, vgl. hierzu auch Fig. 7. Die den Formschluß bildenden Teilkonturen TK können beispielsweise vorab durch spanendes Bearbeiten einer Oberfläche wenigstens eines der beiden Bauteile, insb. durch Einschneiden zirkulär oder schraubenlinienförmig um die Längsachse L verlaufender Kerben, Rillen oder Nuten, oder aber auch durch plastisches Verformen wenigstens einer der die Wirkflächen bildenden Oberfläche, z.B. auch durch Einrollen und/oder Eindrücken, angelegt werden.

Gemäß einer weiteren Ausgestaltung der Erfindung miteinander in Eingriff stehende Flanken der den Formschluß bildenden Teilkonturen TK gegenüber der Richtung der Längsachse zumindest teilweise so gekippt, daß der Formschluß einen Steigungswinkel von weniger als 30°, insb. von weniger als 10°, aufweist. In Anlehnung an die für die Bemessung von Gewinden üblichen Parameter wird hierbei unter dem Steigungswinkel ein Winkel verstanden, den eine an die jeweilige Flanke angelegte Tangente gegenüber einer senkrecht zur der Längsachse L ausgerichtete Bezugsachse einnimmt.

Nach einer anderen Ausgestaltung der Erfindung wird dementsprechend wenigstens eine Flanke der den Formschluß bildenden Teilkonturen TK zumindest anteilig durch wenigstens ein Gewinde gebildet, das in wenigstens einer der die Wirkflächen 1B, 2B des Verbund-Systems bildenden Oberflächen des ersten oder zweiten Bauteils angelegt ist. Beispielsweise kann die wenigstens eine Flanke der den Formschluß bildenden Teilkonturen TK zumindest anteilig durch wenigstens ein in der Bohrung 1A des ersten Bauteils 1 angelegtes Innen-Gewinde oder zumindest anteilig durch wenigstens ein auf dem Außenumfang des zweiten Bauteils 2 angelegtes Außen-Gewindes gebildet sein.

Gemäß einer Weiterbildung dieser Ausgestaltung der Erfindung sind aber sowohl zumindest eine erste Flanke der den Formschluß bildenden Teilkonturen TK zumindest anteilig durch wenigstens ein in der Bohrung 1A des ersten Bauteils 1 angelegtes Innen-Gewinde als auch zumindest eine, insb. mit der ersten Flanke in Eingriff stehende, zweite Flanke der den Formschluß bildenden Teilkonturen TK zumindest anteilig durch wenigstens ein auf einem Außenumfang des zweiten Bauteils angelegtes Außen-Gewindes gebildet. Daher werden nach einer Weiterbildung des Verfahrens der Erfindung die Teilkonturen TK vor dem Schritt des Zusammenführens des ersten Bauteils 1 mit dem zweiten Bauteil 2 zumindest teilweise dadurch gebildet, daß wenigstens eine Nut oder eine Rille in wenigstens eine der Oberflächen der Bauteile eingeformt wird, die im wesentlichen zirkulär oder schraubenlinienförmig in einer Umfangsrichtung der Oberfläche verläuft. Nach einer Ausgestaltung dieser Weiterbildung des Verfahrens werden die Teilkonturen TK vor dem Schritt des Zusammenführens des ersten Bauteils 1 mit dem zweiten Bauteil 2 demgemäß zumindest teilweise dadurch gebildet, daß wenigstens ein Gewinde in wenigstens einer der die Wirkflächen 1B, 2B des Verbund-Systems bildenden Oberflächen durch Einschneiden oder Einrollen angelegt wird.

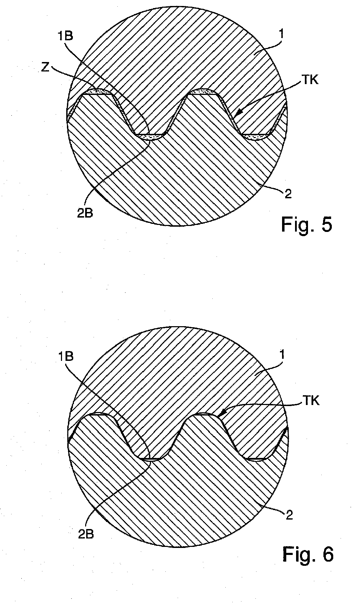

Nach einer weiteren Ausgestaltung der Erfindung sind das Außen-Gewinde und das Innen-Gewinde so ausgelegt, daß das erste und das zweite Bauteile mittels der beiden Gewinde miteinander verschraubbar sind. Somit kann das Zusammenführen des ersten Bauteils 1 mit dem zweiten Bauteil 2 in einfacher Weise dadurch erfolgen, daß das zweiten Bauteil 2 entsprechend in das erste Bauteil 1 eingeschraubt wird, wodurch die beiden Bauteile zueinander und bezüglich des der Längsachse des Verbund-Systems praktisch selbsttätig ausgerichtet werden. Dementsprechend weist weist das im ersten Bauteil 1 angelegte Innen-Gewinde nach einer Weiterbildung dieser Ausgestaltung der Erfindung eine Gewinde-Steigung auf, die etwa gleich ist mit einer Gewinde-Steigung des im zweiten Bauteil 2 angelegten Außen-Gewindes. Nach einer anderen Weiterbildung dieser Ausgestaltung der Erfindung weist das im ersten Bauteil angelegte Innen-Gewinde jedoch eine Gewinde-Steigung auf, die von einer Gewinde-Steigung des im zweiten Bauteil angelegten Außen-Gewindes verschieden ist. Nach einer anderen Ausgestaltung dieser Weiterbildung der Erfindung weisen die Flanken des im ersten Bauteil angelegten Innen-Gewindes einen Gewinde-Flankenwinkel auf, der von einem Gewinde-Flankenwinkel des im zweiten Bauteil angelegten Außen-Gewindes verschieden ist. Beispielsweise kann es sich bei einem der beiden Gewinde um ein Spitzgewinde handeln, während das andere Gewinde als ein Flachgewinde ausgelegt ist. Alternativ können das Innen- und das Außengewinde aber auch so ausgebildet sein, daß der Gewinde-Flankenwinkel des im ersten Bauteil angelegten Innen-Gewindes, wie auch in Fig. 5 angedeutet, etwa gleich ist mit dem Gewinde-Flankenwinkel des im zweiten Bauteil angelegten Außen-Gewindes. Wie in Fig. 6 angedeutet, weisen die Teilkonturen TK, beispielsweise die die Teilkonturen TK bildenden Flanken des wenigstens einen Gewindes, gemäß einer weiteren Ausgestaltung der Erfindung zumindest teilweise plastische Verformungen auf, wodurch die axiale wie auch die radiale Spielfreiheit zwischen den beiden Bauteilen, insb. auch bei Material bedingt unterschiedlichen Wärmedehnungen der beiden Bauteile infolge von Temperaturschwankungen innerhalb des Verbund-Systems, erheblich verbessert werden kann.

Es sei noch erwähnt, daß anstelle eines Gewindes oder in Ergänzung dazu die Teilkonturen TK für den Formschluß aber auch zumindest anteilig durch in die die Wirkflächen bildenden Oberflächen eingearbeitete Kerben, Nuten oder Rillen gebildet sein können, die die Längsachse des Verbundsystems entlang einer Umfangslinie der jeweiligen Wirkfläche beispielsweise als in sich geschlossene Ringnut vollständig oder als offene Ringnut zumindest teilweise umlaufen. Ferner können die Teilkonturen anstelle der in den Fig. 3, 4, 5 oder 6 eher trapezförmig ausgebildeten Querschnitte auch andere geeignete Querschnittsformen aufweisen, wie z.B. einen dreieckförmigen Querschnitt, aufweisen.

Nach einer anderen Ausgestaltung des Verfahrens der Erfindung werden die Teilkonturen teilweise durch zumindest teilweise plastisches Verformen unmittelbar während des Zusammenfügens der beiden Bauteile 1, 2 und des damit verbundenen Bildens der Wirkflächen des Verbund-Systems wenigstens eines der Bauteile gebildet. Dies kann z.B. in einfacher Weise dadurch erfolgen, daß zunächst das oben erwähnte Innen-Gewinde oder das oben erwähnte Außen-Gewinde in der beschriebenen Weise vor dem Zusammenfügen der Bauteile 1, 2 entsprechend angelegt wird und daß dessen Flanken während des Zusammenfügens der Bauteile in die korrespondierende Oberfläche des komplementären Bauteils 1 bzw. 2 eingedrückt werden. Nach einer Weiterbildung dieser Ausgestaltung der Erfindung werden die Teilkonturen dadurch gebildet, daß wenigstens eines der Bauteile 1, 2 - ausgehend von der zugehörigen, die entsprechende Wirkfläche bildenden Oberfläche - mit einer Eindringtiefe plastisch verformt wird, die sich mindestens 0,05 mm, insb. mehr als 0,1 mm, in das Material des wenigstens einen Bauteils hinein erstreckt.

Gemäß einer Weiterbildung der Erfindung ist zur weiteren Erhöhung der der in Richtung der Längsachse bestehenden Auszugfestigkeit des zweiten Bauteils aus dem ersten Bauteil und/oder zur Verbesserung der Fluid-Dichtigkeit des Verbund-Systems zwischen der inneren Oberfläche des ersten Bauteils und der äußeren Oberfläche des zweiten Bauteils ferner eine aus einem, insb. verformbaren und/oder adhäsiv wirkenden, Füllmaterial Z bestehende dünne Zwischenlage angeordnet. Für den Fall, daß das Füllmaterial im flüssigen und/oder pastösen Zustand auf die Oberflächen aufzubringen bzw. auf den Oberflächen zu verteilen ist, kann das Füllmaterial Z beispielsweise mit entsprechenden Weichmachern versetzt und/oder durch Erwärmen entsprechend verflüssigt werden. Nach einer vorteilhaften Ausgestaltung dieser Weiterbildung ist das Füllmaterial so beschaffen, daß die das erste und das zweite Bauteil aneinander bindenden Wirkflächen 1B, 2B des Verbund-Systems zumindest teilweise einen Stoffschluß mit dem zwischen dem ersten und dem zweiten Bauteil 1, 2 angeordneten Füllmaterial Z eingehen. Bei dem Füllmaterial kann es sich beispielsweise um einen Kunststoff, wie z.B. ein Epoxydharz, einen fluorhaltiger Kunststoff, ein Elastomere oder dergleichen, und/oder einen, insb. an Metall adhäsiv bindenden, Klebstoff handeln. Ferner kann auch ein, insb. geeignet beschichtetes, Gewebe und/ oder Papier oder Hanf als Füllmaterial dienen. Nach einer anderen Ausgestaltung dieser Weiterbildung der Erfindung dient als Füllmaterial jedoch ein, z.B. in Form einer streichfähigen Lot-Paste, auf wenigstens eine der die Wirkflächen bildenden Oberflächen aufgetragenes, insb. unterhalb einer Rekristallisationstemperatur wenigstens eines der für die Bauteile 1, 2 verwendeten der Materialien schmelzendes, Lot, insb. ein Hart-Lot. Beispielsweise kann hiefür auch ein Lot verwendete werden, daß zumindest anteilig aus einem amorphen Metall besteht und daß beispielsweise als eine Lot-Folie ausgebildet ist, die vor oder während des Zusammenbaus der beiden Bauteile 1, 2 auf wenigstens eine von deren die Wirkflächen bildenden Oberflächen aufgelegt ist.

Nach einer anderen Weiterbildung der Erfindung ist der Reibschluß zumindest anteilig durch plastisches, insb. gemischt elastisch-plastisches, Verformen wenigstens eines der beiden Bauteile bei einer unterhalb einer Rekristallisationstemperatur des Materials, insb. auch unterhalb der Rekristallisationstemperatur des Materials des ersten Bauteils und unterhalb der Rekristallisationstemperatur des Materials des zweiten Bauteils, liegenden Arbeitstemperatur gebildet, wobei als Rekristallisationstemperatur im weitesten Sinne jene Temperatur angesehen werden kann, bei der im Material des jeweiligen Bauteils aufgebaute mechanische Spannungen durch Neuordnung des Materialgefüges im wesentlichen wieder abgebaut werden. Anders gesagt, können gemäß dieser Ausgestaltung der Erfindung die den Formschluß bildenden Teilkonturen zumindest anteilig durch Kaltverformen wenigstens eines der beiden Bauteile gebildet werden. Beispielsweise kann das Verformen bei einer Arbeitstemperatur von weniger als 350°C erfolgen. Allerdings kann es, insb. bei der Verwendung von zwischen den Bauteilen eingelegtem Füllmaterial Z, es von Vorteil sein, während das Verformen des wenigstens einen Bauteils bei einer Arbeitstemperatur durchzuführen, die zumindest zeitweise auf einen Temperaturbereich oberhalb von 15°C, insb. auf Raumtemperatur oder darüber, eingestellt ist. Nach einer vorteilhaften Ausgestaltung dieser vorgenannten Weiterbildung der Erfindung sind auch die den Formschluß bildenden Teilkonturen TK zumindest anteilig durch zumindest anteilig plastisches, insb. gemischt elastisch-plastisches, Verformen wenigstens eines der beiden Bauteile erzeugt. Dies kann z.B. unmittelbar während des Zusammenfügens beider Bauteile 1, 2 und somit ggf. auch bei einer unterhalb einer Rekristallisationstemperatur des Materials liegenden Arbeitstemperatur erfolgen. Beispielsweise kann ein Teil der Teilkonturen vor dem Zusammenfügen beider Bauteile in wenigstens einer der später die Wirkflächen bilden Oberflächen, beispielsweise durch Einformen entweder des erwähnten Innen-Gewindes im ersten Bauteil oder des erwähnten Außen-Gewindes im zweiten Bauteil, angelegt und unmittelbar beim Verformen derart auf die andere komplementäre Oberfläche einwirken gelassen werden, daß der noch fehlende komplementäre Teil der Teilkonturen durch Eindrücken der vorab bereits gebildeten Teilkonturen in die komplementäre Oberfläche erzeugt wird. Für den oben erwähnten Fall, daß das Material des ersten Bauteils eine von der Oberflächenhärte des Materials des zweiten Bauteils verschiedene Oberflächenhärte aufweist, sind die vorab einzuformenden Teilkonturen dabei möglichst in dem Bauteil anzulegen, dessen Material die höhere der beiden Oberflächenhärten aufweist, damit einen Formschluß mit möglichst großer der Tragtiefe erzielt werden kann.

Die zum dauerhaften Verformen, insb. auch zum Kaltverformen, des wenigstens eine Bauteils und damit einhergehend zum Bilden der Wirkflächen 1B, 2B des Verbund-Systems erforderlichen Verformungskräfte F können beispielsweise, wie auch in der US-A 56 10 342 oder der

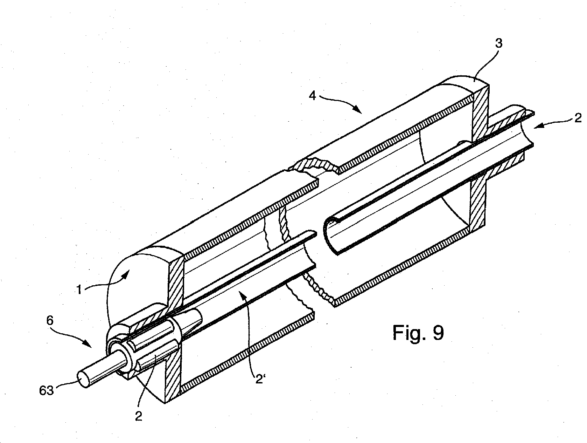

WO-A 03/048693 vorgeschlagen, zumindest anteilig mittels eines Walz-Werkzeuges 6 erzeugt werden, das, wie in Fig. 9 dargestellt, in einem im Inneren des zweiten Bauteils 2 gebildetes und von dessen Außenwand umgebenes Lumen 2' plaziert und von innen gegen die Außenwand gedrückt wird. Am in Einbringrichtung vorderen Ende trägt das Walzwerkzeug 6 einen Käfig 61 mit auf dessen kreisförmige Mantelfläche verteilten und in entsprechende Öffnungen eingesetzten Rollen 62. Der Mittelpunktskreis, auf dem die Rollen 62 sich beim Drehen des Walzwerkzeugs 6 bewegen, hat einen Radius, der mittels eines in Einbringrichtung verschiebbaren Stempels 63 verstellt werden kann. Durch Vergrößern dieses Radius im Vergleich zu demjenigen Radius, mit dem das Walzwerkzeug 6 in das Lumen des Bauteils 2 zunächst eingeführt wird, läßt sich dieses abschnittsweise gegen die Innenwand des zweiten Bauteils 2 pressen. Das Rohrsegment wird nun mit der Innenwand der Bohrung 1A im ersten Bauteil 1 auf diese Weise, insb. auch ohne Wärmezufuhr, verpreßt. Dadurch kommt es zu einem geringfügigen Fließen des Materials des zweiten Bauteils 2 und damit an diesen Stellen, insb. auch im Bereich der Teilkonturen TK, zu einer sehr festen mechanischen Verbindung zwischen den Bauteilen 1, 2. Der mittels des Walzwerkzeug 6 erzeugte Anpreßdruck sowie Form und Größe der Teilkonturen sind dabei so aufeinander abzustimmen, daß im Bereich der Teilkonturen TK bzw. in d em für die Wirkflächen 1B, 2B insgesamt vorgesehenen Bereich ausreichend viel Material vom zweiten Bauteil 2 fließen gelassen wird. Aufgrund der vorbeschriebenen plastischen Verformungen des als Rohrsegment ausgebildeten zweiten Bauteils 2 kommt es partiell zu einem geringfügigen Dünnerwerden von dessen Wandstärke und somit einerseits zu einer mechanischen Druckspannung in Längsrichtung des zweiten Bauteils, da dieses geringfügig verlängert wird. Andererseits kommt es auch innerhalb des ersten Bauteils 1 zu einer mechanischen Druckspannung in Radialrichtung, im folgenden kurz Radialspannung genannt. Die Radialspannung ist darauf zurückzuführen, daß während des Verpressens zwar das zweite Bauteil anteilig plastisch, dagegen das erste Bauteil 1 wegen seiner gegenüber der Wandstärke des zweiten Bauteils 2 viel größeren Dicke im wesentlichen nur elastisch verformt wird und daß daher nach dem Verpressen das erste Bauteil 1 eine zum Lumen des zweiten Bauteils 2 gerichtete und insoweit als Radialkraft ausgebildete Normalkraft auf die Wirkflächen ausübt.

Alternativ oder in Ergänzung dazu können die für die dauerhafte Verformung wenigstens eines der Bauteile erforderlichen Verformungskräfte zumindest anteilig beispielsweise auch dadurch erzeugt werden, daß, wie auch in der US-A 60 47 547 beschrieben, das erste Bauteil mittels eines das Bauteil zumindest teilweise umgreifenden Preß-Werkzeuges von außen maschinell etwas zusammendrückt und somit zumindest anteilig plastisch wird. Dabei wird mittels des Preß-Werkzeugs auf mindestens einen Teil einer äußeren Umfangsfläche des ersten Bauteils von zwei oder mehreren flächig an der Umfangsfläche anliegenden Backen des Preß-Werkzeugs ein zur Fixieren der Bauteile ausreichender, im wesentlichen radial nach innen wirkender Druck ausgeübt. Im fixierten Zustand zeigt eine Umfangsfläche des ersten Bauteils 1 an den Anliegeflächen der Backen des Preß-Werkzeugs dann gelegentlich, wie auch in Fig. 8 angedeutet, Vertiefungsflächen 1D, die geringfügig tiefer liegen als diejenigen Teile 1C der Umfangsfläche, auf die der Druck nicht eingewirkt hat. Dies ist ein Zeichen dafür, daß es zumindest im Bereich der Umfangsfläche zu plastischen Verformungen gekommen ist. Dabei sind diese plastischen Verformungen so ausgebildet, daß diese wiederum das erste wie auch das zweite Bauteil zumindest anteilig möglichst dauerhaft elastisch verformen und somit in für die Fixierung ausreichendem Maße radial nach innen gerichtete, als Normalkräfte F auf die Wirkflächen 1B, 2B einwirkende Einspannkräfte permanent erzeugen.

Für den oben beschriebenen Fall, daß das zweite Bauteil als Meßrohr dienen soll und demgemäß als ein zumindest abschnittsweise gerades, kreiszylindrisches Rohr ausgebildet ist, wird vorzugsweise allerdings nur ein solcher Druck auf das erste Bauteil ausgeübt, daß das Lumen des als Rohr ausgebildeten zweiten Bauteils an der Fixierstelle praktisch nicht eingeengt wird. Dementsprechend sind die Verformungskräfte nach einer vorteilhaften Ausgestaltung der Erfindung also so ausgebildet, daß das zweite Bauteil zumindest im Bereich der Wirkflächen im wesentlichen keine Querschnittsverjüngungen und/oder -verengungen erfährt und daß ein initialer Innen-Durchmesser des zweiten Bauteils auch nach dem Schritt des Bildens der das erste und das zweite Bauteil aneinander bindenden Wirkflächen des Verbund-Systems zumindest im Bereich der Wirkflächen praktisch durchgängig und im wesentlichen unverändert erhalten bleibt. Insoweit kann also ohne weiteres sichergestellt werden, daß beispielsweise das als Meßrohr ausgebildete zweite Bauteil 2 trotz der hohen Einspannkräfte, mit denen es beispielsweise im als Trägerelement ausgebildeten ersten Bauelement 1 gehalten ist, selbst kaum Verformungen erfährt und somit auch nach dem Einbau über die gesamte Meßrohrlänge auch nach dem Einbau einen weitgehend gleichbleibenden, uniformen Querschnitt aufweist.

Alternativ oder in Ergänzung zu dem vorgenannten Preß- oder dem vorgenannten Walz-Verfahren können die zur Verformung erforderlichen Verformungskräfte zumindest anteilig beispielsweise auch hydraulisch dadurch erzeugt werden, daß ein geeignetes Fluid, insb. eine Flüssigkeit wie Öl oder Wasser oder ein Flüssigkeits-Gas-Gemisch, in ein im Inneren des zweiten Bauteils gebildetes Lumen, beispielsweise also das Lumen des Meßrohrs, eingeleitet wird und daß dieses in das Lumen des zweiten Bauteils eingeleitete Fluid mit einer einen statischen Druck des Fluids erhöhenden Kraft beaufschlagt wird. Ferner können die zur Verformung des wenigstens einen Bauteils und insoweit auch zum Bilden der Wirkflächen des Verbund-Systems dienenden erforderlichen Verformungskräfte zumindest anteilig auch dadurch erzeugt werden, daß, wie auch in der US-B 65 98 281 oder der

US-B 65 19 828 angedeutet, das erste Bauteil 1 erwärmt und somit thermisch gedehnt und/oder das zweite Bauteil 2 abgekühlt und somit thermisch geschrumpft wird, und daß die beiden Bauteile nach dem Zusammenführen auf eine im wesentlichen gleiche Temperatur gebracht werden.

Wie sich aus der Gesamtheit der vorangehenden Erläuterungen unschwer erkennen läßt, ist ein Vorteil der Erfindung im besonderen auch darin zu sehen, daß das Verbund-System bzw. das Verfahren zu dessen Herstellung besonders auch für die Anwendung auf solche Bauteilen geeignet ist, die aus verschiedenen Materialien bestehen, bei denen sich also die verwendeten Materialien hinsichtlich wenigstens einer physikalischen und/oder chemischen Eigenschaft, beispielsweise hinsichtlich ihrer Wärmeausdehnungskoeffizienten, ihrer Elastizitäts-Moduln, ihrer Oberflächenhärten, ihrer Dehn- und/oder Streckgrenzen, ihrere Rekristallisationstemperatur, ihrer Schmelztemperatur etc., voneinander signifikant unterscheiden. Für den Fall, daß es sich bei den für die Bauteile des erfindungsgemäßen Verbund-Systems verwendeten Materialien um Metalle handelt, können sich diese darüber hinaus ohne weiteres auch in der Weise stofflich voneinander unterscheiden, daß sie nicht oder nur mit erheblichem fertigungstechnischen Aufwand miteinander verschweißbar sind. Demgemäß besteht nach einer weiteren Ausgestaltung der Erfindung das erste Bauteil aus Stahl oder Edelstahl während als Material für das zweite Bauteil Titan, Zirkonium, Tantal oder eine aus wenigstens einem der vorgenannten hoch-korrosionsbeständigen Metalle bestehende Metall-Legierung gewählt ist. Beispielsweise kann es sich bei den für die Bauteile 1, 2 verwendeten Materialien jeweils auch um voneinander verschiedene Stahlsorten handeln. Ein weiterer Vorteil der Erfindung besteht ferner darin, daß sich das Verbund-System, wie beispielsweise auch aus der Fig. 2 ersichtlich, besonders auch für das Verbinden eines massiven und vergleichsweise starren Bauteils, wie z.B. dem Endstücks 1, mit einem im Vergleich dazu leicht deformierbaren, relativ dünnwandigen Bauteil, wie dem Meßrohr, eignet. Darüber hinaus können die Auszugsfestigkeiten des erfindungsgemäßem Verbund-Systems auch nach mehrfacher Schwingungsbelastung ohne weiteres oberhalb von 50% der anfänglich vorhanden, vergleichsweise hohen Anfangsauszugsfestigkeiten und somit auch für eine hohe Betriebsdauer ohne weiteres oberhalb der für Meßaufnehmer der beschriebenen Art geforderten Mindestfestigkeiten gehalten werden.

In Kenntnis der Erfindung und vor dem Hintergrund des eingangs referierten Standes der Technik, insb. der US-A 56 10 342, der US-A 60 47 457, der
US-A 61 68 069, der US-B 65 19 828, der US-B 65 98 281 oder der
WO-A 03/048693, besteht für den Fachmann auch keinerlei Schwierigkeit darin, die für die jeweilige Anwendung geeigneten Materialien für die Bauteile sowie die optimalen Parameter, sei es nun hinsichtlich der tatsächlichen Dimensionierung der Bauteile des Verbund-Systems oder auch der hinsichtlich der Einstellung der für die Fertigung verwendeten Werkzeuge und Maschinen, zu ermitteln. Gleichermaßen besteht nunmehr für den Fachmann auch keine Schwierigkeit darin, das erfindungsgemäße Verfahren entsprechend den konkreten Anforderungen an die Haltbarkeit des Verbund-Systems anzupassen und hinsichtlich der Fertigungsabläufe zu optimieren.

## Patentansprüche

1. Meßaufnehmer vom Vibrationstyp, insb. Coriolis-Massendurchfluß-Meßaufnehmer, für ein dem Messen eines in einer Leitung strömenden Mediums dienendes Meßgerät, welcher Meßaufnehmer wenigstens ein, insb. bi-metallisches, Verbund-System aufweist, das umfaßt:
- ein, insb. aus Metall bestehendes, erstes Bauteil (1) und
- ein, insb. aus Metall bestehendes, zweites Bauteil (2),
- wobei das zweite Bauteil (2) als ein dem Führen des zu messenden Mediums dienendes, im Betrieb des Meßaufnehmers vibrierendes Meßrohr des Meßaufnehmers ausgebildet ist,
-- das sich zumindest teilweise durch das erste Bauteil (1) entlang einer gedachten Längsachse (L) erstreckt
-- und das ausgestaltet ist, zumindest zeitweise Biegeschwingungen um eine in Richtung der Längsachse (L) verlaufende oder mit der Längsachse (L) koinzidierende Schwingungsachse auszuführen;
- wobei das zweite Bauteil (2) mit einer zumindest teilweise gewölbten, insb. als Zylinderoberfläche ausgebildeten, äußeren Oberfläche eine innere Oberfläche des ersten Bauteils flächig so kontaktiert,
-- daß das erste Bauteil das zweite Bauteil zumindest abschnittsweise umgreift
-- und daß die beiden Bauteile (1, 2) anteilig auch unter Bildung eines zumindest anteilig in Richtung der Längsachse (L) wirkenden Reibschlusses miteinander mechanisch fest verbunden sind;
- wobei durch die einander kontaktierenden Oberflächen der beiden Bauteile (1, 2) gebildete, insb. reibschlüssig aneinander gebundene, Wirkflächen (1B, 2B) des Verbund-Systems derart geformt sind, daß die beiden Bauteile (1, 2) im Bereich dieser, insb. als in sich geschlossenen Umfangsflächen ausgebildete, Wirkflächen (1B, 2B) Teilkonturen (TK) aufweisen,
-- welche Teilkonturen (TK) zumindest teilweise durch Einformen wenigstens einer Nut oder Rille in wenigstens eine der Oberflächen der Bauteile, insb. durch Einschneiden wenigstens eines Gewindes, vor dem Zusammenführen des ersten Bauteils (1) mit dem zweiten Bauteil (2) gebildet sind, welche wenigstens eine Nut oder Rille im wesentlichen zirkulär oder schraubenlinienförmig in einer Umfangsrichtung der Oberfläche verläuft
-- und welche Teilkonturen (TK) unter Bildung eines zumindest anteilig ebenfalls in Richtung der Längsachse (L) wirkenden Formschlusses zumindest teilweise ineinandergreifen;
- und wobei auf die durch die einander kontaktierenden Oberflächen der beiden Bauteile (1, 2) gebildeten Wirkflächen des Verbund-Systems Einspannkräfte, insb. radial zur Längsachse ausgerichtete Normalkräfte, so einwirken, daß wenigstens eines der beiden Bauteile (1, 2) des Verbund-Systems zumindest anteilig dauerhaft gemischt elastisch-plastisch verformt ist.

2. Meßaufnehmer nach Anspruch 1, wobei der Reibschluß zumindest anteilig durch plastisches, insb. gemischt elastisch-plastisches, Verformen wenigstens eines der beiden Bauteile bei einer unterhalb einer Rekristallisationstemperatur des Materials liegenden Arbeitstemperatur gebildet ist, insb. bei einer zumindest zeitweise in einem Temperaturbereich zwischen 50°C und 350°C gehaltenen Arbeitstemperatur.

3. Meßaufnehmer nach einem der vorherigen Ansprüche,
- wobei das zweite Bauteil als ein zumindest abschnittsweise gerades, kreiszylindrisches Rohr ausgebildet ist, und wobei ein Innen-Durchmesser eines als zweites Bauteil dienenden rohrförmigen Halbzeugs zumindest im Bereich der Wirkflächen praktisch durchgängig einem initialen Anfangs-Innen-Durchmesser des als zweites Bauteil dienenden Rohrs im wesentlichen unverändert entspricht, so daß das zweite Bauteil zumindest im Bereich der Wirkflächen im wesentlichen keine Querschnittsverjüngungen und/oder -verengungen aufweist; und/oder
- wobei die innere Oberfläche des ersten Bauteils durch eine Innenwand einer sich zumindest in einen Teilbereich des ersten Bauteils erstreckenden Bohrung gebildet ist; und/oder
- wobei die äußere Oberfläche des zweiten Bauteils durch eine Außenwand des zweiten Bauteils gebildet ist.

4. Meßaufnehmer nach einem der vorherigen Ansprüche,
- wobei die Teilkonturen zumindest teilweise plastische Verformungen aufweisen; und/oder
- wobei die den Formschluß bildenden Teilkonturen zumindest anteilig durch, insb. unmittelbar während des Zusammenfügens beider Bauteile und/oder bei einer unterhalb einer Rekristallisationstemperatur des Materials liegenden Arbeitstemperatur erfolgtes, zumindest anteilig plastisches, insb. gemischt elastisch-plastisches, Verformen wenigstens eines der beiden Bauteile gebildet sind.

5. Meßaufnehmer nach dem vorherigen Anspruch, wobei die den Formschluß bildenden Teilkonturen zumindest anteilig durch Kaltverformen wenigstens eines der beiden Bauteile gebildet sind.

6. Meßaufnehmer nach einem der vorherigen Ansprüche,
- wobei die beiden Bauteile zumindest anteilig einen, insb. in Richtung der Längsachse und/oder in einer Umfangsrichtung der äußeren Oberfläche des zweiten Bauteils wirkenden, Preßverband bilden; und/oder
- wobei wenigstens zwei miteinander in Eingriff stehende Flanken der den Formschluß bildenden Teilkonturen einander soweit überdecken, daß der Formschluß eine Tragtiefe von mindestens 0,05 mm, insb. von größer als 0,1 mm, aufweist; und/oder
- wobei die plastische Verformung wenigstens eines der Bauteile sich von der zugehörigen, die entsprechende Wirkfläche bildenden Oberfläche mit einer Eindringtiefe von mindestens 0,05 mm, insb. von größer als 0,1 mm, in das Material hinein erstreckt; und/oder
- wobei miteinander in Eingriff stehende Flanken der den Formschluß bildenden Teilkonturen gegenüber der Richtung der Längsachse so gekippt sind, daß der Formschluß einen Steigungswinkel von weniger als 30°, insb. von weniger als 10°, aufweist.

7. Meßaufnehmer nach einem der vorherigen Ansprüche, wobei die den Formschluß bildenden Teilkonturen zumindest anteilig durch spanendes Bearbeiten einer Oberfläche wenigstens eines der beiden Bauteile, nämlich durch Einschneiden wenigstens eines Gewindes gebildet sind.

8. Meßaufnehmer nach dem vorherigen Anspruch,
- wobei die Teilkonturen bildenden Flanken des wenigstens einen Gewindes zumindest teilweise plastisch verformt sind; und/oder
- wobei das im ersten Bauteil angelegte Innen-Gewinde eine Gewinde-Steigung aufweist, die etwa gleich ist mit einer Gewinde-Steigung des im zweiten Bauteil angelegten Außen-Gewindes; und/oder
- wobei das im ersten Bauteil angelegte Innen-Gewinde eine Gewinde-Steigung aufweist, die von einer Gewinde-Steigung des im zweiten Bauteil angelegten Außen-Gewindes verschieden ist; und/oder
- wobei die Flanken des im ersten Bauteil angelegten Innen-Gewindes einen Gewinde-Flankenwinkel aufweisen, der etwa gleich ist mit einem Gewinde-Flankenwinkel des im zweiten Bauteil angelegten Außen-Gewindes; und/oder
- wobei die Flanken des im ersten Bauteil angelegten Innen-Gewindes einen Gewinde-Flankenwinkel aufweisen, der von einem Gewinde-Flankenwinkel des im zweiten Bauteil angelegten Außen-Gewindes verschieden ist.

9. Meßaufnehmer nach einem der vorherigen Ansprüche, wobei zur Erhöhung einer Zugfestigkeit, insb. einer in Richtung der Längsachse bestehende Auszugfestigkeit des zweiten Bauteils aus dem ersten Bauteil, zwischen der inneren Oberfläche des ersten Bauteils und der äußeren Oberfläche des zweiten Bauteils eine aus einem, insb. verformbaren und/oder adhäsiv wirkenden, Füllmaterial, insb. einem Kunststoff, Papier, Hanf oder dergleichen, bestehende dünne Zwischenlage angeordnet ist.

10. Meßaufnehmer nach einem der vorherigen Ansprüche, weiters umfassend ein, insb. vom ersten Bauteil beabstandetes, drittes Bauteil, durch das sich das zweite Bauteil zumindest teilweise erstreckt,
- wobei das zweite Bauteil eine innere Oberfläche des dritten Bauteils ebenfalls flächig so kontaktiert, daß das erste Bauteil das zweite Bauteil zumindest abschnittsweise zumindest teilweise umgreift, und
- wobei durch die einander kontaktierenden Oberflächen des zweiten und dritten Bauteils gebildete Wirkflächen des Verbund-Systems ebenfalls derart geformt sind, daß das zweite und dritte Bauteil im Bereich dieser Wirkflächen Teilkonturen aufweisen, die unter Bildung eines zumindest anteilig ebenfalls in Richtung der Längsachse wirkenden Formschlusses zumindest teilweise ineinander greifen.

11. Meßaufnehmer nach dem vorherigen Anspruch, wobei das zweite Bauteil die innere Oberfläche des dritten Bauteils flächig so kontaktiert, daß die auch das zweite und dritte Bauteil anteilig unter Bildung eines zumindest anteilig in Richtung der Längsachse wirkenden, insb. durch Kaltverformen wenigstens eines der beiden Bauteile erzielten, Reibschlusses miteinander mechanisch fest verbunden sind.

12. Meßaufnehmer nach einem der vorherigen Ansprüche,
- wobei eines der Bauteile, insb. das erste Bauteil, aus einem ersten Material und wenigstens ein anderes der Bauteile, insb. das zweite Bauteil, aus einem zweiten Material bestehen, wobei sich das erste Material hinsichtlich wenigstens einer physikalischen und/oder chemischen Eigenschaft, insb. einer Oberflächenhärte, einer Dehn- oder Streckgrenze, eines Wärmeausdehnungskoeffizienten und/oder hinsichtlich des Elastizitätsmoduls etc., vom zweiten Material wesentlich unterscheidet; und/oder
- wobei wenigstens eines der Bauteile aus einem im wesentlichen duktilen Material, insb. einem Metall, besteht; und/oder
- wobei zumindest das erste Bauteil und das zweite Bauteil jeweils aus Metall, insb. Stahl, Titan, Tantal, Zirkonium oder dergleichen, bestehen.

13. Meßaufnehmer nach einem der vorherigen Ansprüche, wobei die den Formschluß bildenden Teilkonturen zumindest anteilig durch spanendes Bearbeiten einer Oberfläche wenigstens eines der beiden Bauteile gebildet sind.

14. Meßaufnehmer nach einem der vorherigen Ansprüche, wobei das erste Bauteil als eine an einem Ende des Meßrohrs fixiertes, insb. plattenförmiges oder trichterförmiges, Endstück eines Trägerelements des Meßaufnehmers ausgebildet ist.

15. Meßaufnehmer nach dem vorherigen Anspruch,
- wobei das Trägerelement als ein das Meßrohr umhüllendes Aufnehmer-Gehäuse des Meßaufnehmers ausgebildet ist oder
- wobei das Trägerelement als ein das Meßrohr umhüllender, insb. zylindrischer und im wesentlichen koaxial zum Meßrohr ausgerichteter, Gegenschwinger des Meßaufnehmers ausgebildet ist.

16. Meßaufnehmer nach einem der Anprüche 1 bis 12, wobei das erste Bauteil als ein an einem Ende des Meßrohrs fixierter, dem Anschließen einer als Rohrleitung ausgebildeten Leitung an das Meßrohr dienender Flansch des Meßaufnehmers ausgebildet ist.

17. Meßaufnehmer nach einem der vorherigen Ansprüche,
- wobei die Teilkonturen so angeordnet und so geformt sind, daß der Formschluß zumindest dann einer potentiell möglichen oder zumindest virtuell vorhandenen Auszugsbewegung des Meßrohrs entgegenwirkt, wenn das vibrierende Meßrohr im Betrieb gedehnt wird; und/oder
- wobei die Teilkonturen so angeordnet und so geformt sind, daß der Formschluß auch dann einer potentiell möglichen oder zumindest virtuell vorhandenen Auszugsbewegung des Meßrohrs entgegenwirkt, wenn das vibrierende Meßrohr im Betrieb entspannen gelassen wird.

18. Verfahren zum Herstellen eines Meßaufnehmers gemäß einem der Ansprüche 1 bis 16, wobei die innere Oberfläche des ersten Bauteils des Verbund-Systems durch eine Innenwand einer sich zumindest in einen Teilbereich des ersten Bauteils erstreckenden Bohrung gebildet ist, und die, insb. als Zylinderoberfläche ausgebildete, äußere Oberfläche des zweiten Bauteils des Verbund-Systems durch eine, insb. zumindest abschnittsweise zylinderförmige, Außenwand des zweiten Bauteils gebildet ist, welches Verfahren die Schritte
- Zusammenführen des ersten Bauteils mit dem zweiten Bauteil in der Weise, daß sich das zweite Bauteil zumindest teilweise durch die im ersten Bauteil gebildete Bohrung in Richtung der Längsachse des Verbund-Systems erstreckt, sowie
- Bilden der das erste und das zweite Bauteil aneinander bindenden Wirkflächen des Verbund-Systems umfaßt,
-- wobei zum Bilden der Wirkflächen des Verbund-Systems Verformungskräfte auf wenigstens eines der beiden Bauteile in der Weise einwirken gelassen werden, daß wenigstens eines der beiden Bauteile zumindest anteilig elastisch, insb. gemischt elastisch-plastisch, verformt wird, und
-- wobei die innere Oberfläche des ersten Bauteils und die äußere Oberfläche des zweiten Bauteils so geformt und die auf die beiden Bauteile einwirkenden Verformungskräfte so ausgebildet sind, daß eine von der inneren Oberfläche des ersten Bauteils, insb. in Form einer in sich geschlossenen Umfangsfläche, gebildete erste Wirkfläche des Verbund-Systems und eine von der äußeren Oberfläche des zweiten Bauteils, insb. in Form einer in sich geschlossenen Umfangsfläche, gebildete zweite Wirkfläche des Verbund-Systems unter Bildung des zumindest anteilig in Richtung der Längsachse wirkenden Formschlusses zumindest abschnittsweise einander dauerhaft kontaktieren,
-- wobei Teilkonturen (TK) in die die erste Wirkfläche des Verbund-Systems bildende Oberfläche des ersten Bauteils sowie die die zweite Wirkfläche des Verbund-Systems bildende Oberfläche des zweiten Bauteils jeweils eingeformt und unter Bildung des Formschlusses zumindest teilweise ineinander greifen gelassen werden wobei die Teilkonturen (TK) zumindest teilweise durch Einformen wenigstens einer Nut oder Rille in die Oberflächen der Bauteile gebildet werden, wobei die wenigstens eine Nut oder Rille im wesentlichen zirkulär oder schraubenlinienförmig in einer Umfangsrichtung der Oberflächen verläuft,
-- und wobei die Teilkonturen unmittelbar während des Bildens der Wirkflächen des Verbund-Systems zumindest teilweise durch zumindest anteilig plastisches Verformen wenigstens eines der Bauteile gebildet werden.

19. Verfahren nach Anspruch 17,
- wobei die innere Oberfläche des ersten Bauteils und die äußere Oberfläche des zweiten Bauteils so geformt und die auf die beiden Bauteile einwirkenden Verformungskräfte so ausgebildet sind, daß die von der inneren Oberfläche des ersten Bauteils gebildete erste Wirkfläche des Verbund-Systems und die von der äußeren Oberfläche des zweiten Bauteils gebildete zweite Wirkfläche des Verbund-Systems zumindest abschnittsweise auch unter Bildung eines ebenfalls zumindest anteilig in Richtung der Längsachse wirkenden Reibschlusses einander dauerhaft kontaktieren; und/oder
- wobei die Verformungskräfte so ausgebildet sind, daß wenigstens eines der beiden Bauteile zumindest anteilig plastisch verformt wird.

20. Verfahren nach einem der Ansprüche 17 bis 18, wobei in die die erste Wirkfläche des Verbund-Systems bildende Oberfläche des ersten Bauteils sowie die die zweite Wirkfläche des Verbund-Systems bildende Oberfläche des zweiten Bauteils jeweils Teilkonturen eingeformt werden, und wobei die Teilkonturen unter Bildung des Formschlusses zumindest teilweise ineinander greifen gelassen werden.

21. Verfahren nach dem vorherigen Anspruch, wobei die Teilkonturen vor dem Schritt des Zusammenführens des ersten Bauteils mit dem zweiten Bauteil zumindest teilweise dadurch gebildet werden, daß wenigstens eine Nut oder Rille in wenigstens eine der Oberflächen der Bauteile eingeformt, insb. eingeschnitten, wird, die im wesentlichen zirkulär oder schraubenlinienförmig in einer Umfangsrichtung der Oberfläche verläuft.

22. Verfahren nach dem vorherigen Anspruch, wobei die Teilkonturen vor dem Schritt des Zusammenführens des ersten Bauteils mit dem zweiten Bauteil zumindest teilweise dadurch gebildet werden, daß wenigstens ein Gewinde in wenigstens einer der die Wirkflächen des Verbund-Systems bildenden Oberflächen, insb. durch Einschneiden, angelegt wird.

23. Verfahren nach dem vorherigen Anspruch, wobei vor dem Schritt des Zusammenführens des ersten Bauteils mit dem zweiten Bauteil zumindest eine erste Flanke der den Formschluß bildenden Teilkonturen zumindest anteilig durch wenigstens ein in der Bohrung des ersten Bauteils angelegtes Innen-Gewinde und zumindest eine zweite Flanke der den Formschluß bildenden Teilkonturen zumindest anteilig durch wenigstens ein auf einem Außenumfang des zweiten Bauteils angelegtes Außen-Gewindes gebildet werden.

24. Verfahren nach einem der Ansprüche 17 bis 22, wobei die Teilkonturen zumindest anteilig dadurch gebildet werden, daß wenigstens eines der Bauteile ausgehend von der zugehörigen, die entsprechende Wirkfläche bildenden Oberfläche mit einer Eindringtiefe plastisch verformt wird, die sich mindestens 0,05 mm, insb. mehr als 0,1 mm, in das Material des wenigstens einen Bauteils hinein erstreckt.

25. Verfahren nach einem der Ansprüche 17 bis 23,
- wobei die dem Bilden der Wirkflächen des Verbund-Systems dienenden Verformungskräfte zumindest anteilig mittels eines Walz-Werkzeuges erzeugt werden, das in einem im Inneren des zweiten Bauteils gebildetes und von dessen Außenwand umgebenes Lumen plaziert und von innen gegen die Außenwand gedrückt wird und/oder
- wobei die dem Bilden der Wirkflächen des Verbund-Systems dienenden Verformungskräfte zumindest anteilig mittels eines Preß-Werkzeuges erzeugt werden, das das erste Bauteil zumindest teilweise umgreift und von außen zusammendrückt.

26. Verfahren nach einem der Ansprüche 17 bis 24, weiters umfassend einen Schritt des Einleitens eines Fluid, insb. einer Flüssigkeit oder eines Flüssigkeits-Gas-Gemisch, in ein in einem Inneren des zweiten Bauteils gebildetes Lumen.

27. Verfahren nach dem vorherigen Anspruch, wobei die dem Bilden der Wirkflächen des Verbund-Systems dienenden Verformungskräfte zumindest anteilig dadurch erzeugt werden, daß das in das Lumen des zweiten Bauteils eingeleitet Fluid mit einer einen statischen Druck des Fluids erhöhenden Kraft beaufschlagt wird.

28. Verfahren nach einem der Ansprüche 17 bis 26, wobei die dem Bilden der Wirkflächen des Verbund-Systems dienenden Verformungskräfte zumindest anteilig dadurch erzeugt werden, daß das erste Bauteil erwärmt und somit thermisch gedehnt und/oder das zweite Bauteil abgekühlt und somit thermisch geschrumpft wird, und daß die beiden Bauteile nach dem Zusammenführen auf eine im wesentlichen gleiche Temperatur gebracht werden.

29. Verfahren nach einem der Ansprüche 17 bis 27, weiters umfassend einen Schritt des Aufbringens eines Füllmaterials, insb. eines Lots oder eines Klebstoffs, auf wenigstens einer der die Wirkflächen des Verbund-Systems bildenden Oberflächen.

30. Verfahren nach dem vorherigen Anspruch, wobei die das erste und das zweite Bauteil aneinander bindenden Wirkflächen des Verbund-Systems zumindest teilweise einen Stoffschluß mit dem zwischen dem ersten und dem zweiten Bauteil angeordneten Füllmaterial eingehen.

31. Verfahren nach einem der Ansprüche 17 bis 29, wobei das zweite Bauteil als ein zumindest abschnittsweise gerades, kreiszylindrisches Rohr ausgebildet ist, und wobei die Verformungskräfte so ausgebildet sind, daß das zweite Bauteil zumindest im Bereich der Wirkflächen im wesentlichen keine Querschnittsverjüngungen und/oder -verengungen erfährt und daß ein initialer Innen-Durchmesser des zweiten Bauteils auch nach dem Schritt des Bildens der das erste und das zweite Bauteil aneinander bindenden Wirkflächen des Verbund-Systems zumindest im Bereich der Wirkflächen praktisch durchgängig und im wesentlichen unverändert erhalten bleibt.

## Claims

1. Vibronic-type sensor, particularly a Coriolis mass flow sensor, for a measuring device designed to measure a medium flowing through a pipe, said sensor having at least a composite system, particularly bi-metallic, which comprises the following elements:
- a first component (1), particularly made of metal, and
- a second component (2), particularly made of metal,
- wherein the second component (2) is designed as a measuring tube of the sensor, said tube vibrating during the operation of the sensor and serving to conduct the medium to be measured,
-- wherein said measuring tube extends at least partially through the first component (1) along an imaginary longitudinal axis (L)
-- and is designed to produce flexural vibrations, at least temporarily, around an axis of vibration extending in the direction of the longitudinal axis (L) or coinciding with the longitudinal axis (L);
- wherein the second component (2) contacts - over a large surface area - an inner surface of the first component with an at least partially curved outer surface, particularly designed as a cylinder surface in such a way that
-- the first component surrounds the second component at least in sections
-- and in that the two components (1, 2) are in part mechanically interconnected to one another in a fixed manner, also forming a frictional connection acting at least in part in the direction of the longitudinal axis (L);
- wherein active surfaces (1B, 2B) of the composite system - formed by the surfaces of the two components (1, 2) that are in contact with one another, particularly connected to one another via a frictional connection - are formed in such a way that the two components (1, 2) feature partial contours (TK) in the area of these active surfaces (1B, 2B) particularly designed as self-contained peripheral surfaces,
-- wherein said partial contours (TK) are formed at least partially by forming at least one groove or notch in at least one of the surfaces of the components, particularly by cutting at least one thread, prior to joining the first component (1) with the second component (2), said at least one groove or notch extending in an essentially circular or helical manner in a peripheral direction of the surface,
-- and wherein said partial contours (TK) at least partially interlock, forming a positive-locking fit that also acts at least in part in the direction of the longitudinal axis (L);
- and wherein clamping forces, particularly normal forces radially aligned in relation to the longitudinal axis, acting on the active surfaces of the composite system formed by the surfaces of the two components (1, 2) that are in contact with one another act in such a way that at least one of the two components (1, 2) of the composite system is at least partially permanently shaped in a mixed elastic/plastic manner.

2. Sensor as claimed in Claim 1, wherein the frictional connection is formed at least partially by plastic deformation, particularly mixed elastic/plastic deformation, of at least one of the two components at a working temperature below a recrystallization temperature of the material, particularly a working temperature maintained at least temporarily in a temperature range between 50 °C and 350 °C.

3. Sensor as claimed in one of the previous claims,
- wherein the second component is designed as a circular cylindrical tube, which is at least partially straight, and wherein an inner diameter of a tubular semifinished product serving as the second component corresponds - essentially in an unchanged manner, at least in the area of the active surfaces and practically consistently - to an initial inner diameter of the tube serving as the second component such that the second component essentially does not feature any narrowing and/or tapering of the cross-section at least in the area of the active surfaces; and/or
- wherein the inner surface of the first component is formed by an inner wall of a bore extending at least in a partial area of the first component; and/or
- wherein the outer surface of the second component is formed by an outer wall of the second component.

4. Sensor as claimed in one of the previous claims,
- wherein the partial contours at least partially feature plastic deformations; and/or
- wherein the partial contours forming the positive-locking fit are formed at least partially by a deformation of at least one of the two components, particularly a deformation occurring directly during the joining of the two components, and/or at a working temperature that is below a recrystallization temperature of the material, particularly partially in a plastic manner, particularly in a mixed elastic/plastic manner.

5. Sensor as claimed in the previous Claim, wherein the partial contours forming the positive-locking fit are formed at least partially by the cold working of at least one of the two components.

6. Sensor as claimed in one of the previous claims,
- wherein the two components at least partially form a press fit acting particularly in the direction of the longitudinal axis and/or in a peripheral direction of the outer surface of the second component; and/or
- wherein at least two interlocking flanks of the partial contours forming the positive-locking fit cover over one another in such a way that the positive-locking fit features a load-bearing depth of at least 0.05 mm, particularly greater than 0.1 mm; and/or
- wherein the plastic deformation of at least one of the components extends from the associated surface, which forms the corresponding active surface, into the material with a penetration depth of at least 0.05 mm, particularly greater than 0.1 mm; and/or
- wherein interlocking flanks of the partial contours forming the positive-locking fit are inclined in relation to the direction of the longitudinal axis in such a way that the positive-locking fit features an angle of inclination of less than 30°, particularly less than 10°.

7. Sensor as claimed in one of the previous claims, wherein the partial contours forming the positive-locking fit are at least partially formed by the machining of a surface of at least one of the two components, particularly by the cutting of at least a thread.

8. Sensor as claimed in the previous Claim,
- wherein the flanks - forming the partial contours - of the at least one thread are at least partially deformed in a plastic manner; and/or
- wherein the inner thread implemented in the first component has a thread pitch that is approximately equal to a thread pitch of the outer thread implemented in the second component; and/or
- wherein the inner thread implemented in the first component has a thread pitch that is different from a thread pitch of the outer thread implemented in the second component; and/or
- wherein the flanks of the inner thread implemented in the first component have a thread angle which is approximately equal to a thread angle of the outer thread implemented in the second component; and/or
- wherein the flanks of the inner thread implemented in the first component have a thread angle, which is different from a thread angle of the outer thread implemented in the second component.

9. Sensor as claimed in one of the previous claims, wherein a thin intermediate layer, particularly made from a filler material, particularly a malleable and/or adhesive filler material, particularly a plastic, paper, hemp or similar material, is arranged between the inner surface of the first component and the outer surface of the second component in order to increase the tensile strength, particularly a pull-out resistance - existing in the direction of the longitudinal axis - of the second component from the first component.

10. Sensor as claimed in one of the previous claims, further comprising a third component, particularly spaced at a distance from the first component, through which the second component at least partially extends,
- wherein the second component also contacts, over a large surface area, an inner surface of the third component in such a way that the first component at least partially surrounds the second component at least in sections, and
- wherein the active surfaces of the composite system, which are formed by the surfaces of the second and third component, which contact one another, are equally formed in such a way that the second and the third component feature partial contours in the area of these active surfaces, wherein said contours at least partially interlock forming a positive-locking fit also acting at least partially in the direction of the longitudinal axis.

11. Sensor as claimed in the previous Claim, wherein the second component is in contact - over a large surface area - with the inner surface of the third component in such a way that the second and the third component are also permanently mechanically connected with one another forming a frictional connection, which acts at least partially in the direction of the longitudinal axis, particularly through the cold working of at least one of the two components.

12. Sensor as claimed in one of the previous claims,
- wherein one of the components, particularly the first component, is made from a first material and at least another of the components, particularly the second component, is made from a second material, wherein the first material is essentially different from the second material with regard to at least one physical and/or chemical property, particularly a surface hardness, a yield strength or limit of elasticity, a thermal expansion coefficient and/or with regard to an elasticity module, etc.; and/or
- wherein at least one of the components is made from an essentially ductile material, particularly a metal; and/or
- wherein at least the first component and the second component are each made from a metal, particularly steel, titanium, tantalum, zirconium or a similar metal.

13. Sensor as claimed in one of the previous claims, wherein the partial contours forming the positive-locking fit are formed at least partially by machining a surface of at least one of the two components.

14. Sensor as claimed in one of the previous claims, wherein the first component is designed as an end piece of a support element of the sensor, particularly in the shape of a plate or funnel, fixed on an end of the measuring tube.

15. Sensor as claimed in the previous claim,
- wherein the support element is designed as a sensor housing surrounding the measuring tube, or
- wherein the support element is designed as a counter-oscillator of the sensor, said counter-oscillator being particularly cylindrical and aligned in an essentially coaxial manner in relation to the measuring tube, and enveloping the measuring tube.

16. Sensor as claimed in one of the Claims 1 to 12, wherein the first component is designed as a flange of the sensor, fixed on an end of the measuring tube and serving to connect a pipe to the measuring tube, said pipe being designed as a conduit.

17. Sensor as claimed in one of the previous claims,
- wherein the partial contours are arranged and formed in such a way that the positive-locking fit acts counter to a potentially possible or at least virtual retraction movement of the measuring tube at least when the vibrating measuring tube is stretched during operation; and/or
- wherein the partial contours are arranged and formed in such a way that the positive-locking fit also acts counter to a potentially possible or at least virtual retraction movement of the measuring tube when the vibrating measuring tube is allowed to relax during operation.

18. Procedure designed to manufacture a sensor as claimed in one of the Claims 1 to 16, wherein the inner surface of the first component of the composite system is formed by an inner wall of a bore extending at least into a partial area of the first component, and the outer surface - particularly designed as a cylindrical surface - of the second component of the composite system is formed by an outer wall of the second component, particularly at least partially cylindrical, said procedure comprising the following steps:
- Joining of the first component with the second component in such a way that the second component extends at least partially through the bore formed in the first component in the direction of the longitudinal axis of the composite system, and
- Formation of the active surfaces of the composite system, which connect the first component with the second component,
-- wherein for the purpose of forming the active surfaces of the composite system, deformation forces are allowed to act on at least one of the two components in such a way that at least one of the two components is at least partially deformed in an elastic manner, particularly in a mixed elastic/plastic manner, and
- wherein the inner surface of the first component and the outer surface of the second component are formed in such a way - and the deformation forces acting on the two components are designed in such a way - that a first active surface of the composite system, formed by the inner surface of the first component, particularly in the form of a self-contained peripheral surface, and a second active surface of the composite system, formed by the outer surface of the second component, particularly in the form of a self-contained peripheral surface, are in permanent contact with one another at least in part, forming a positive-locking fit acting at least partially in the direction of the longitudinal axis,
-- wherein partial contours in which the surface of the first component forming the first active surface of the composite system is formed, as well as the surface of the second component forming the second active surface of the composite system is formed, are allowed to interlock at least partially forming a positive-locking fit, wherein the partial contours (TK) are formed at least partially by forming at least one groove or notch in the surfaces of the components, wherein the at least one groove or notch extends in an essentially circular or helical manner in a peripheral direction of the surfaces,
-- and wherein the partial contours are formed directly during the formation of the active surfaces of the composite system, at least partially by at least the partial plastic deformation of at least one of the components.

19. Procedure as claimed in Claim 17,
- wherein the inner surface of the first component and the outer surface of the second component are formed in such a way - and the deformation forces acting on the two components are designed in such a way - that the first active surface of the composite system, which is formed by the inner surface of the first component, and the second active surface of the composite system, which is formed by the outer surface of the second component, are in permanent contact with one another at least partially, also forming a frictional connection also acting at least partially in the direction of the longitudinal axis; and/or
- wherein the deformation forces are designed in such a way that at least one of the two components is at least partially deformed in a plastic manner.

20. Procedure as claimed in one of the Claims 17 to 18, wherein partial contours are formed in the surface of the first component forming the first active surface of the composite system and the surface of the second component forming the second active surface of the composite system, and wherein the partial contours are allowed to at least partially interlock, forming the positive-locking fit.

21. Procedure as claimed in the previous Claim, wherein the partial contours are at least partially formed - before the step involving the joining of the first component with the second component - in that at least a groove or a notch is formed, particularly cut, into at least one of the surfaces of the components, said groove or notch being essentially circular or helical in a peripheral direction of the surface.

22. Procedure as claimed in the previous Claim, wherein - prior to the step involving the joining of the first component with the second component - the partial contours are at least partially formed in that at least a thread is created, particularly by incision, in at least one of the surfaces forming the active surfaces of the composite system.

23. Procedure as claimed in the previous Claim, wherein - prior to the step involving the joining of the first component with the second component - at least a first flank of the partial contours forming the positive-locking fit is at least partially formed by at least an inner thread implemented in the bore of the first component, and at least a second flank of the partial contours forming a positive-locking fit is at least partially formed by at least an outer thread implemented on the outer circumference of the second component.

24. Procedure as claimed in one of the Claims 17 to 22, wherein the partial contours are formed at least partially by the fact that at least one of the components is plastically deformed, starting from the associated surface forming the corresponding active surface, with a depth of penetration which extends at least 0.05 mm, particularly more than 0.1 mm, into the material of the at least one component.

25. Procedure as claimed in one of the Claims 17 to 23,
- wherein the deformation forces serving to form the active surfaces of the composite system are generated at least partially using a rolling die which is positioned in a channel formed in the interior of the second component and surrounded by the outer wall of said second component, and which is pressed from the inside against the outer wall, and/or
- wherein the deformation forces serving to form the active surfaces of the composite system are generated at least partially using a pressing die, which surrounds the first component at least partially and presses it together from the outside.

26. Procedure as claimed in one of the Claims 17 to 24, further comprising a step to introduce a fluid, particularly a liquid or a liquid/gas mixture, into a channel formed in an interior of the second component.

27. Procedure as claimed in the previous Claim, wherein the deformation forces serving to form the active surfaces of the composite system are generated at least partially by the fact that the fluid introduced into the interior channel of the second component is subject to a force that increases a static pressure of the fluid.

28. Procedure as claimed in one of the Claims 17 to 26, wherein the deformation forces serving to form the active surfaces of the composite system are generated at least partially by the first component being heated and therefore thermally stretched and/or by the second component being cooled and therefore thermally shrunk, and that the two components are brought to essentially the same temperature after being joined.

29. Procedure as claimed in one of the Claims 17 to 27, further comprising a step involving the application of a filler material, particularly a solder or a glue, on at least one of the surfaces forming the active surfaces of the composite system.

30. Procedure as claimed in the previous Claim, wherein the active surfaces of the composite system - joining the first component and the second component to one another - at least partially form a positive-locking fit with the filler material arranged between the first and the second component.

31. Procedure as claimed in one of the Claims 17 to 29, wherein the second component is designed as a circular cylindrical tube which is at least partially straight, and wherein the deformation forces are designed in such a way that the second component essentially does not experience any restrictions or reductions in the cross-section at least in the area of the active surfaces, and that an initial inner diameter of the second component remains essentially unchanged practically consistently at least in the area of the active surfaces even after the step of the formation of the active surfaces of the composite system, which connect the first component and the second component to one another.

## Revendications

1. Capteur du type à vibrations, notamment un capteur de débit Coriolis, pour un appareil destiné à la mesure d'un produit s'écoulant dans une conduite, lequel capteur comporte au minimum un système composite, notamment bimétallique, qui comprend les éléments suivants :
- un premier composant (1), notamment métallique, et
- un deuxième composant (2), notamment métallique,
- le deuxième composant (2) étant conçu en tant que tube de mesure du capteur, lequel tube vibre pendant le fonctionnement du capteur et sert au guidage du produit à mesurer,
-- lequel tube de mesure s'étend au moins partiellement à travers le premier composant (1) le long d'un axe longitudinal (L) imaginaire
-- et qui est conçu de manière à exécuter au moins temporairement des vibrations de flexion autour d'un axe de vibration s'étendant en direction de l'axe longitudinal (L) ou coïncidant avec l'axe longitudinal ;
- le deuxième composant (2) étant en contact, sur une grande surface - par une surface extérieure au moins partiellement courbée, notamment conçue en tant que surface cylindrique - avec une surface intérieure du premier composant, de telle sorte
-- que le premier composant entoure au moins partiellement le deuxième composant
-- et que les deux composants (1, 2) sont en partie reliés mécaniquement de façon fixe entre eux, également en formant une liaison par frottement agissant au moins partiellement dans la direction de l'axe longitudinal (L) ;
- les surfaces actives (1B, 2B) du système composite - notamment liées entre elles par une liaison par frottement et qui sont formées par les surfaces en contact réciproque des deux composants (1, 2) - étant déformées de telle sorte que les deux composants (1, 2) présentent des contours partiels (TK) dans la zone de ces surface actives (1B, 2B) notamment conçues en tant que surfaces périphériques fermées sur elles-mêmes,
-- lesquels contours partiels (TK) sont formés au moins partiellement par la réalisation d'au moins une rainure ou gorge dans au moins l'une des surfaces des composants, notamment par la réalisation d'un filetage, avant l'assemblage du premier composant (1) avec le deuxième composant (2), l'au moins une rainure ou gorge étant pour l'essentiel circulaire ou en forme d'hélice et s'étendant dans une direction périphérique de la surface,
-- et lesquels contours partiels (TK) s'imbriquent au moins partiellement en formant un engagement positif agissant au moins partiellement également en direction de l'axe longitudinal (L) ;
- et des forces de serrage, notamment des forces normales alignées radialement par rapport à l'axe longitudinal, agissant sur les surfaces actives du système composite formées par les surfaces en contact mutuel des deux composants (1, 2), de telle sorte qu'au moins un des deux composants (1, 2) du système composite est déformé au moins en partie durablement de manière élastique-plastique mixte.

2. Capteur selon la revendication 1, pour lequel la liaison par frottement est réalisée au moins partiellement par déformation plastique, notamment sous forme élastique-plastique mixte, d'au moins l'un des deux composants à une température de travail inférieure à une température de recristallisation du matériau, notamment à une température de travail maintenue au moins temporairement dans une gamme de température comprise entre 50 °C et 350 °C.

3. Capteur selon l'une des revendications précédentes,
- pour lequel le deuxième composant est conçu en tant que tube cylindrique circulaire au moins partiellement droit, et un diamètre intérieur d'une ébauche tubulaire servant de deuxième composant correspond, pour l'essentiel sous forme inchangée, au moins dans la zone des surfaces actives, pratiquement de bout en bout à un diamètre intérieur initial du tube servant de deuxième composant, si bien que le deuxième composant ne présente, au moins dans la zone des surfaces actives, pour l'essentiel aucune réduction ni rétrécissement de la section ; et/ou
- la surface intérieure du premier composant étant formée par une paroi intérieure d'un perçage s'étendant au moins dans une zone partielle du premier composant ; et/ou
- la surface extérieure du deuxième composant étant formée par une paroi extérieure du deuxième composant.

4. Capteur selon l'une des revendications précédentes,
- pour lequel les contours partiels présentent au moins partiellement des déformations plastiques ; et/ou
- pour lequel les contours partiels formant l'engagement positif sont formés au moyen d'une déformation au moins de l'un des deux composants, laquelle déformation est réalisée directement pendant l'assemblage des deux composants et/ou avec une température de travail inférieure à une température de recristallisation du matériau, notamment partiellement de manière plastique, notamment de manière élastique-plastique mixte.

5. Capteur selon la revendication précédente, pour lequel les contours partiels formant l'engagement positif sont formés au moins partiellement par déformation à froid au moins de l'un des deux composants.

6. Capteur selon l'une des revendications précédentes,
- pour lequel les deux composants forment au moins partiellement un ajustement serré agissant notamment en direction de l'axe longitudinal et/ou dans une direction périphérique de la surface extérieure du deuxième composant ; et/ou
- pour lequel au moins deux flancs en prise l'un dans l'autre des contours partiels formant l'engagement positif se recouvrent mutuellement de telle sorte que l'engagement positif présente une profondeur de portée d'au moins 0,05 mm, notamment supérieure à 0,1 mm ; et/ou
- pour lequel la déformation plastique d'au moins l'un des composants s'étend à l'intérieur du matériau à partir de la surface associée formant la surface active correspondante, avec une profondeur de pénétration d'au moins 0,05 mm, notamment supérieure à 0,1 mm ; et/ou
- les flancs en prise l'un dans l'autre des contours partiels formant l'engagement positif étant inclinés par rapport à la direction de l'axe longitudinal de telle sorte que l'engagement positif présente un angle de pente inférieur à 30°, notamment inférieur à 10°.

7. Capteur selon l'une des revendications précédentes, pour lequel les contours partiels formant l'engagement positif sont formés au moins partiellement par un usinage par enlèvement de copeaux d'une surface au moins de l'un des deux composants, notamment par la réalisation d'au moins un filetage.

8. Capteur selon la revendication précédente,
- pour lequel les flancs - formant les contours partiels - de l'au moins un filetage sont au moins partiellement déformés plastiquement ; et/ou
- pour lequel le filetage intérieur réalisé dans le premier composant présente une pente environ égale à une pente du filetage extérieur réalisé dans le deuxième composant ; et/ou
- pour lequel le filetage intérieur réalisé dans le premier composant présente une pente qui est différente d'une pente du filetage extérieur réalisé dans le deuxième composant ; et/ou
- pour lequel les flancs du filetage intérieur réalisé dans le premier composant présente un angle de flanc, qui est environ égal à un angle de flanc du filetage extérieur réalisé dans le deuxième composant ; et/ou
- pour lequel les flancs du filetage intérieur réalisé dans le premier composant présente un angle de flanc, qui diffère d'un angle de flanc du filetage extérieur réalisé dans le deuxième composant.

9. Capteur selon l'une des revendications précédentes, pour lequel est disposée - en vue de l'augmentation d'une résistance à la traction, notamment une résistance à l'arrachement existant dans la direction de l'axe longitudinal du deuxième composant à partir du premier composant - une couche intermédiaire mince entre la surface intérieure du premier composant et la surface extérieure du deuxième composant, laquelle couche se compose d'un matériau de remplissage notamment déformable et/ou ayant un effet adhésif, lequel matériau est notamment constitué d'un plastique, de papier, de chanvre ou d'un matériau similaire.

10. Capteur selon l'une des revendications précédentes, comprenant en outre un troisième composant, notamment espacé du premier composant, à travers lequel le deuxième composant s'étend au moins partiellement,
- le deuxième composant étant également en contact, sur une grande surface, avec une surface intérieure du troisième composant, de telle sorte que le premier composant entoure au moins partiellement le deuxième composant, et
- les surfaces actives du système composite, qui sont formées par les surfaces, en contact réciproque, du deuxième et du troisième composant, étant également déformées de telle sorte que le deuxième et le troisième composant présentent dans la zone de ces surfaces actives des contours partiels, qui s'imbriquent au moins partiellement en formant un engagement positif agissant au moins partiellement également en direction de l'axe longitudinal.

11. Capteur selon la revendication précédente, pour lequel le deuxième composant est en contact, sur une grande surface, avec la surface intérieure du troisième composant, de telle sorte que le deuxième et le troisième composant sont également reliés mécaniquement l'un à l'autre de manière fixe pour former une liaison par friction qui agit au moins partiellement dans la direction de l'axe longitudinal, notamment par déformation à froid au moins de l'un des deux composants.

12. Capteur selon l'une des revendications précédentes,
- pour lequel l'un des composants, notamment le premier composant, est constitué d'un premier matériau et au moins un autre des composants, notamment le deuxième composant, est constitué d'un deuxième matériau, le premier matériau étant sensiblement différent du deuxième matériau en ce qui concerne au moins une propriété physique et/ou chimique, notamment une dureté de surface, une limite d'élasticité, un coefficient de dilatation thermique et/ou en ce qui concerne le module d'élasticité, etc. ; et/ou
- pour lequel au moins l'un des composants est constitué d'un matériau pour l'essentiel ductile, notamment un métal ; et/ou
- pour lequel au moins le premier composant et le deuxième composant sont constitués respectivement de métal, notamment de l'acier, du titane, du tantale, du zirconium ou un métal similaire.

13. Capteur selon l'une des revendications précédentes, pour lequel les contours partiels formant un engagement positif sont réalisés au moins partiellement par l'usinage par enlèvement de copeaux d'une surface d'au moins l'un des deux composants.

14. Capteur selon l'une des revendications précédentes, pour lequel le premier composant est conçu en tant que pièce d'extrémité d'un élément support du capteur, laquelle pièce est fixée sur une extrémité du tube de mesure et est notamment en forme de plaque ou en forme d'entonnoir.

15. Capteur selon la revendication précédente,
- pour lequel l'élément support est conçu en tant que boîtier de capteur enveloppant le tube de mesure, ou
- pour lequel l'élément support est conçu en tant que contre-vibrateur du capteur, lequel contre-vibrateur est notamment cylindrique et aligné pour l'essentiel de façon coaxiale au tube de mesure, et enveloppant le tube de mesure.

16. Capteur selon l'une des revendications 1 à 12, pour lequel le premier composant est conçu en tant que bride de capteur, fixé sur une extrémité du tube de mesure, servant au raccordement au tube de mesure d'une ligne conçue en tant que conduite.

17. Capteur selon l'une des revendications précédentes,
- pour lequel les contours partiels sont disposés et formés de telle sorte que l'engagement positif s'oppose à un mouvement d'arrachement du tube de mesure potentiellement possible ou existant au moins virtuellement, lorsque le tube de mesure vibrant est allongé pendant le fonctionnement ; et/ou
- pour lequel les contours partiels sont disposés et formés de telle sorte que l'engagement positif s'oppose également à un mouvement d'arrachement du tube de mesure potentiellement possible ou existant au moins virtuellement, lorsque le tube de mesure vibrant est détendu pendant le fonctionnement.

18. Procédé destiné à la fabrication d'un capteur selon l'une des revendications 1 à 16, pour lequel la surface intérieure du premier composant du système composite est formée par une paroi intérieure d'un perçage s'étendant au moins dans une zone partielle du premier composant, et la surface extérieure - notamment conçue en tant que surface cylindrique - du deuxième composant du système composite est formée par une paroi extérieure du deuxième composant, notamment au moins partiellement en forme de cylindre,
lequel procédé comprend les étapes suivantes :
- Assemblage du premier composant avec le deuxième composant de telle manière que le deuxième composant s'étend au moins partiellement à travers le perçage réalisé dans le premier composant, en direction de l'axe longitudinal du système composite, ainsi que
- Constitution des surfaces active du système composite, qui lient le premier composant au deuxième composant,
-- des forces de déformation agissant, pour la constitution des surfaces actives du système composite, sur au moins l'un des deux composants, de telles sorte qu'au moins l'un des deux composants est déformé au moins partiellement sous forme élastique, notamment sous forme élastique-plastique mixte, et
-- la surface intérieure du premier composant et la surface extérieure du deuxième composant étant formées - et les forces de déformation agissant sur les deux composants étant conçues - de telle sorte qu'une première surface active du système composite, formée par la surface intérieure du premier composant, notamment sous la forme d'une surface périphérique fermée sur elle-même, et une deuxième surface active du système composite, formée par la surface extérieure du deuxième composant, notamment sous la forme d'une surface périphérique fermée sur elle-même, sont durablement en contact l'une avec l'autre au moins partiellement, en formant un engagement positif agissant au moins partiellement en direction de l'axe longitudinal,
-- des contours partiels étant formés dans la surface du premier composant formant la première surface active du système composite, ainsi que dans la surface du deuxième composant formant la deuxième surface active du système composite, et s'imbriquant au moins partiellement en formant l'engagement positif, les contours partiels (TK) étant formés au moins partiellement par la réalisation d'au moins une rainure ou gorge dans les surfaces des composants, l'au moins une rainure ou gorge étant pour l'essentiel circulaire ou en forme d'hélice, et s'étendant dans une direction périphérique des surfaces,
-- et les contours partiels étant formés, immédiatement après la constitution des surfaces actives du système composite, au moins en partie par une déformation plastique au moins partielle au moins de l'un des composants.

19. Procédé selon la revendication 17,
- pour lequel la surface intérieure du premier composant et la surface extérieure du deuxième composant sont formées - et les forces de déformation agissant sur les deux composants sont conçues - de telle sorte que la première surface active du système composite, formée par la surface intérieure du premier composant et la deuxième surface active du système composite, formée par la surface extérieure du deuxième composant, sont durablement en contact l'une avec l'autre au moins partiellement, y compris en formant une liaison par frottement agissant également au moins partiellement en direction de l'axe longitudinal ; et/ou
- pour lequel les forces de déformation sont conçues de telle manière qu'au moins l'un des deux composants est au moins partiellement déformé plastiquement.

20. Procédé selon l'une des revendications 17 à 18, pour lequel sont formés des contours partiels respectivement dans la surface - formant la première surface active du système composite - du premier composant - ainsi que dans la surface formant la deuxième surface active du système composite - du deuxième composant - et les contours partiels s'imbriquant au moins partiellement en formant un engagement positif.

21. Procédé selon la revendication précédente, pour lequel les contours partiels sont formés - avant l'étape de l'assemblage du premier composant avec le deuxième composant - au moins partiellement par le fait qu'au moins une rainure ou une gorge est réalisée dans au moins l'une des surfaces des composants, notamment entaillée, laquelle rainure ou gorge est pour l'essentiel circulaire ou en forme d'hélice dans une direction périphérique de la surface.

22. Procédé selon la revendication précédente, pour lequel les contours partiels sont, même avant l'étape de l'assemblage du premier composant avec le deuxième composant, formés au moins partiellement par le fait qu'au moins un filetage est réalisé, notamment par entaillage, dans au moins l'une des surfaces formant les surfaces actives du système composite.

23. Procédé selon la revendication précédente, pour lequel sont formés, avant l'étape de l'assemblage du premier composant avec le deuxième composant, un premier flanc des contours partiels formant l'engagement positif au moins partiellement par au moins un filetage intérieur réalisé dans le perçage du premier composant, et un deuxième flanc des contours partiels formant l'engagement positif au moins partiellement par au moins un filetage extérieur réalisé sur un périmètre extérieur du deuxième composant.

24. Procédé selon l'une des revendications 17 à 22, pour lequel les contours partiels sont constitués au moins partiellement par le fait qu'au moins l'un des composants est déformé plastiquement avec une profondeur de pénétration, à partir de la surface associée, formant la surface active correspondante, laquelle profondeur est d'au moins 0,05 mm, notamment supérieure à 0,1 mm, dans le matériau de l'au moins un composant.

25. Procédé selon l'une des revendications 17 à 23,
- pour lequel les forces de déformation servant à la formation des surfaces actives du système composite sont générées au moins partiellement au moyen d'un outil de laminage, qui est formé à l'intérieur du deuxième composant et placé dans un canal intérieur entouré par la paroi extérieure dudit deuxième composant, et qui est pressé de l'intérieur contre la paroi extérieure, et/ou
- pour lequel les forces de déformation servant à la formation des surfaces actives du système composite sont générées au moins partiellement au moyen d'un outil de pressage, qui entoure au moins partiellement le premier composant et le comprime de l'extérieur.

26. Procédé selon l'une des revendications 17 à 24, comprenant en outre une étape d'introduction d'un fluide, notamment un liquide ou un mélange de liquide-gaz dans un canal intérieur formé dans un intérieur du deuxième composant.

27. Procédé selon la revendication précédente, pour lequel les forces de déformation servant à la formation des surfaces actives du système composite sont générées au moins partiellement par le fait que le fluide introduit dans le canal intérieur du deuxième composant est soumis à une force augmentant une pression statique du fluide.

28. Procédé selon l'une des revendications 17 à 26, pour lequel les forces de déformation servant à la formation des surfaces actives du système composite sont générées au moins partiellement lorsque le premier composant est échauffé et, par conséquent, dilaté thermiquement, et/ou le deuxième composant est refroidi et, par conséquent, contracté thermiquement, et de telle sorte que les deux composants sont amenés, après l'assemblage, pour l'essentiel à la même température.

29. Procédé selon l'une des revendications 17 à 27, comprenant en outre une étape d'application d'un matériau de remplissage, notamment une brasure ou une colle, sur au moins l'une des surfaces formant les surfaces actives du système composite.

30. Procédé selon la revendication précédente, pour lequel les surfaces actives - liant entre eux le premier et le deuxième composant - du système composite forment un engagement positif avec le matériau de remplissage disposé entre le premier et le deuxième composant.

31. Procédé selon l'une des revendications 17 à 29, pour lequel le deuxième composant est conçu au moins partiellement en tant que tube cylindrique circulaire, et pour lequel les forces de déformation sont conçues de telle sorte que le deuxième composant ne subit, au moins dans la zone des surfaces actives, pour l'essentiel aucune réduction ni rétrécissement de la section, et de telle sorte qu'un diamètre intérieur initial du deuxième composant demeure quasi totalement et pour l'essentiel inchangé au moins dans la zone des surfaces actives, même après l'étape de formation des surfaces actives du système composite, liant entre eux le premier et le deuxième composant.
